# EUROPEAN PATENT APPLICATION

(11) **EP 4 169 890 A1**
(43) Date of publication of application: **26.04.2023**
(21) Application number: 21829665.5
(22) Date of filing: 22.06.2021
(51) Int. Cl.: C05F 1/00, C05F 7/00, C05F 15/00

(54) **METHOD FOR PRODUCING A FERTILIZER COMPOSITION FROM BYPRODUCTS FROM THE FISHING INDUSTRY AND WASTE FROM THE PROCESSING OF FOWL, OBTAINED PRODUCT, AND USE**

(30) Priority: 23.06.2020 BR 102020012854; 25.06.2020 BR 132020013043
(71) Applicant: Goncalves, Clenio Antonio, 38.700-062 Patos de MInas (BR); Junior Goncalves, Antonio, 38.700-062 Patos de Minas (BR); Gonalves, Fernando Vilaca, 38.700-062 Patos de Minas (BR); Goncalves, Leandro José, 38.700-062 Patos de Minas (BR)
(72) Inventor: AFONSO, José Adolfo, 38.700-062 Patos de Minas (BR)
(74) Representative: Ferreira Magno, Fernando Antonio
(86) International application number: PCT/BR2021/050269
(87) International publication number: WO 2021/258175

(57) **Abstract**

The present invention is located in the field of sustainable agriculture, referring to two processes of renewable origin for the production of fertilizer from by-products of animal origin, with two innovative raw materials:
• whole fish and/or fish waste and/or fish waste of marine or freshwater origin and/or fish waste containing by-catch fauna, and the pre-treatment developed in the process makes it possible to process any fish species to obtain fish concentrate (CPX), an intermediate product in the subsequent obtaining of fertilizer compositions and/or for use as an ingredient in compositions intended for animal feed.
• Poultry viscera waste. The development aims at making use of raw materials and by-products of poultry viscera to obtain fertilizers with innovative characteristics. The synergy promoted by the stages of the developed process, combined with the qualities and characteristics of the chosen raw material, promoted the development of products with important levels of free natural amino acids, total organic carbon and organic matter.

## Description

### FIELD OF THE INVENTION

The present invention is located in the field related to processes for obtaining compositions rich in amino acids for different applications. More particularly, it is said that the invention is located in the area dealing with the use of residues for fertilizer manufacturing processes. Furthermore, the invention is related to the field of sustainable agriculture, referring to a process for obtaining fertilizers and/or compositions with fertilizer characteristics from by-products of the fishing industry or even protein concentrate obtained from fish and/or their processing waste. More broadly, this patent application is in the field of support for public health issues, as it provides an adequate, innovative and complete destination for a type of waste whose improper disposal can cause severe spread of diseases. Additionally, one of the main aspects of agricultural sustainability promoted by the present invention is related to obtaining a product with fertilizing capacity endowed with particular characteristics of free amino acids and organic carbon content. Also, one of the innovative aspects of the development is the use of raw material that promotes the reuse of by-products of animal origin, generating a composition whose compounds are natural and of high added value.

### BACKGROUND OF THE INVENTION

The current destination of fish waste is a relevant problem that has impacted the environmental scenario . Due to its high organic and inorganic load, fish waste has accelerated deterioration activity and contributes to the formation of chemical compounds, which can contaminate and substantially impair the quality of air, soil and water bodies.

Improper disposal of fish waste is correlated with the occurrence of diseases, therefore being a relevant public health issue.

In this scenario, the need to obtain directives and viable alternatives involving fish waste is economic, social, cultural and environmental. Developments such as that of the present invention are fundamental in the valorization of the fish by-product for its proper management and destination and comprise efforts to use the knowledge and characteristics of the material for its transformation into a product with high added value. Therefore, innovation does not consist only in the product itself, but in one of the best solutions for the disposal of waste in this industry.

Fish waste is considered solid urban waste and, therefore, treated like other waste in this category during urban cleaning activities, which, although extremely important for the environment and public health and constitute one of the functions of sanitation basic, does not consider the diverse realities and peculiarities in each city, and therefore has not been translated into effective actions that allow qualitative changes in the negative situation in which, in general, the urban solid waste management systems are found throughout America Latin America, including Brazil (FERREIRA; ANJOS, 2001).

Just like fish, its residue can have a high nutritional potential and recovery capacity, as long as it is included in appropriate processes and conscious reuse (LIMA, 2013).

Fish residue, in general, constitutes a source of proteins of high biological value, that is, it has a significant amount of essential amino acids and bioactive peptides with antihypertensive, immunoregulatory and antioxidant activity (KIM; MENDES, 2006; RAI et al., 2010; GALVÃO; OETTERER, 2014). The quality of the protein varies depending on the proportion of muscle fibers of each species involved in the material (PHILIPPI, 2008).

Oysters, shellfish, shrimp, viscera and fish in general are good dietary sources of vitamins B6 (pyridoxine), B 12 (cobalamin), niacin and minerals such as calcium, iron, copper, chromium and zinc, fundamental in several important metabolic reactions (INSTITUTE OF MEDICINE, 1998).

Ana Paula Billar dos Santos, in her doctoral thesis, assesses that the main measures aimed at reusing and adding value to fish involve the proper preparation of by-products from waste, which, according to Vidotti (2011), can be divided into two groups, one intended for the preparation of non-edible by-products, used in animal and plant production, and the other for the preparation of edible by-products, intended, for example, for human consumption. The first group is composed of residues considered less noble (viscera, scales, skin and skeleton, including the head). These are usually discarded or used in the production of fish flours, oils, silages and compost, and/or as fertilizers. The second group includes residues with more noble characteristics, which can be submitted to processes to obtain raw material destined to the elaboration of value-added products (breaded, formatted, embedded, among others) for use in human food. The main residue used for this purpose is the carcass with meat attached after removing the fillet to obtain the pulp, in addition to the trimmings obtained during the trimming of fillets (BRASIL, 1952; LEE, 1963; SEIBEL; SOUZA-SOARES, 2003; CAVALCANTE JÚNIOR et al., 2005; ARVANITOYANNIS; KASSAVETI, 2008; PIRES et al., 2014).

Several factors need to be considered to assess the viability of developing by-products, such as the quality of the raw material, care in handling and conservation at low temperatures, so that its use is possible, as well as the social, economic and environmental impacts arising from the activities of valuation (LOPES et al., 2015; ESPÍNDOLA FILHO; OETTERER; ASSIS, 2001).

Still, the same author, in her thesis, analyzes that a viable alternative for organic waste is the elaboration of organic fertilizer, used as an alternative to chemical inputs that cause damage to man and the environment (OLIVEIRA et al., 2013). In this case, composting, effectively managed, offers conditions to obtain the rapid stabilization of pollutant components and makes it possible for them to return to the soil as a natural fertilizer, free of pathogenic bacteria, viruses and parasites (HAY, 1996; KIEHL, 1998).

The composting process involves the participation of four basic elements: carbon source, fermentative material, humidity and oxygen. The carbon source is represented by a dry vegetable residue. Fermentative material is the ingredient for decomposition and also the main source of nitrogen in organic manure. Dead, sick or discarded fish from aquaculture production and residues from the processing stages (viscera, scales, carcasses and skins) are some examples of fermentative materials that could be indicated for the practice of composting. Moisture is considered as a catalyst for chemical reactions and is introduced into the process by adding water in known proportions. Finally, oxygen, obtained by periodically turning the compost, is necessary for maintaining the aerobic environment, which is important for microbial reactions and for the prevention of bad odors (LIMA, 2013).

However, like other state-of-the-art documents, the author in her thesis does not address any process that comprises the enzymatic hydrolysis of proteins from fish residues. Therefore, the fertilizer development process proposed here is a unique contribution to the state of the art.

In this same context, we can say that the use of waste generated by industries that transform animal products is an important factor from an economic, technological, nutritional and public health (environmental) point of view, since by-products can be protein sources of animal origin and reduce costs with its treatment (PARDI et al., 1993; PRICE; SCHWEIGERT, 1994).

Meat meal, resulting from the processing of residues not used for consumption (offal, organs, bones, etc.), It is a food supply rich in nutrients, consisting of proteins of high biological value, mineral salts and B vitamins. Flour is considered a primordial nutritional ingredient in the preparation of feed for domestic animals, currently moving a growing market (OCKERMAN; HANSEN, 1994; PRICE; SCHWEIGERT, 1994; ANDRIGUETTO et al., 1999).

In Brazil, the lack of uniformity of raw material of animal origin forced feed manufacturers to develop a national standardization. It was from there that the National Union of the Animal Feed Industry (SINDIRAÇÕES) and the National Association of Animal Food Manufacturers (ANFAL), with the Ministry of Agriculture, published in 2005 the second edition of the Manual of Standardization of Raw Material for Animal Feed. This manual is based on Law 6,198, of 12/26/74, and Decree 76,986, of 1/6/76 of the Ministry of Agriculture and Supply, and regulates the inspection and inspection of products intended for animal feed (BRASIL, 2005).

Romanelli and Schmidt (2003) evaluated the production of meat meal from the entrails of the alligator from the Pantanal and the study of the physicochemical, biochemical and bacteriological properties of the elaborated meal. The authors also assess that one of the biggest problems faced by the animal feed industry was the lack of uniformity of the existing raw material on the market for the use of its by-products. Thus, it is important to state that the process developed herein seeks to overcome this question, since it proposes a set of synergistic steps to obtain high quality products and added value from an innovative treatment of raw materials that are waste from poultry processing, poultry viscera.

In this context, fertilizers, especially organ minerals from processes that include enzymatic hydrolysis, are an opportunity for technological innovation, as they allow the use of waste from various agro-industrial sectors to add value to the by-product generated. Therefore, in addition to the present invention providing the development of an innovative product, it is important to stress that there is a better use and disposal of by-products of natural animal origin, with plant nutrition as its main target, in order to contribute to the sustainability of agribusiness as a whole.

Although one of the focuses and configurations of the present invention is an organ mineral fertilizer, the developed process enables alternative routes from raw materials that allow obtaining products in the form of fertilizer compositions that can be added and/or mixed with complementary compositions. Still, it is possible to obtain simple organic fertilizers. Complementarily, the product is multifunctional, serving as an ingredient for later obtaining products for animal feed.

Organic compounds, when available, can promote soil quality and efficiency in plant production, as they influence their chemical, physical and biological attributes. Organic waste, both of animal and vegetable origin, has a very varied composition and can quickly provide some nutrients such as phosphorus and potassium, and others such as nitrogen, depending on the degradation of the compounds (FINATTO, J.; ALTMAYER, T.; MARTINI, M.C. The importance of using organic fertilizer in agriculture. Revista Destaques Acadêmicos, Lajeado, v.5, n.4, p. 85 - 93, 2013.).

Organ mineral fertilizers are produced by combining organic and mineral matter in a balanced way, and can be found commercially with diversified source of organic raw material. For single, mixed and compound organic fertilizers, as well as organ minerals, the flowing product must have at least 3% total organic carbon. In the case of solid, organ mineral product, the compound must have at least 8% of total organic carbon and CTC of 80 mmolc/kg, and for the same product, regarding the use of macronutrients and micronutrients, the amount must be 10 % for isolated primary macronutrients (N, P, K) or in mixtures (NP, PK, NPK or NK), 5% of isolated secondary macronutrients or in their mixtures, 4% of isolated micronutrients or in their mixtures (MINISTRY OF AGRICULTURE, LIVESTOCK AND SUPPLY -MAPA. Normative Instruction SDA No. 25, of July 23, 2009. Rules on specifications and guarantees, tolerances, registration, packaging and labeling of simple, mixed, compound, organ mineral and biofertilizers intended for agriculture. Diário Oficial da União - Section 1. Brazil. 2009).

In this scenario, it is relevant to consider that the soil is a critical component of the terrestrial biosphere, functioning as an agricultural system and maintenance of environmental quality, with local, regional and global effects. Soil is capable of delaying or increasing the transfer of carbon to the atmosphere, being able to retain material for a longer time, contributing to the mitigation of climate change, in addition to improving its own quality, by increasing aggregation, porosity, infiltration and retention of water, aeration, nitrogen balance, among others.

Organic matter is the component that is most related to soil quality, directly influencing soil attributes, as it improves infiltration and water retention, favors gas exchange between soil and atmosphere, increases microbial activity, increases soil porosity, leaving it less dense and more aggregated, reducing the compaction and erosion of the surface layers of the soil.

It should be noted that in the study of soil organic matter, nitrogen as well as carbon is a relevant element for the process of storing greenhouse gases in the soil. Its highest concentration is in the organic fraction (more than 90%), a relevant reservoir with more readily available forms, such as nitric and ammonia. Nitrogen is one of the most limiting elements for plant productivity, due to the low availability of nitrogen and the great need for this element by plants.

The search for sustainability in agriculture has worked with other important points, in addition to the stock of organic carbon in the soil. One can cite the use of amino acids, for example, which has been used as a source of nutrients, based on fertilization.

The importance of organ mineral fertilizers in the cultivation of vegetables and fruit is known, being a product that has gained space in the national market. In addition, the use of organ minerals in association with aspects related to the logistics of production chains can reduce production, transport and application costs in relation to other forms of fertilization.

There is no state-of-the-art description of a process as complete as that of the present invention that overcomes all the challenges of producing fertilizer compositions, which can also be organ minerals, from fish by-products, with positive characteristics in relation to organic carbon in the soil, optimal levels of essential amino acids and optimized and particularized process parameters for the best use of the chosen raw material.

Patent document PI05057299, for example, presents a process for obtaining fertilizer based on fresh marine fish and the resulting product, and more precisely deals with a process for obtaining concentrated organic fertilizer, whose raw material fresh fish is pre-crushed and receives the addition of a certain volume of sugar cane molasses, this composition being ground until it reaches a liquid state; being that the liquefied fish passes through a sieve and is pumped into fermentation boxes where more molasses is added; from there, a natural enzymatic fermentation process begins, where it remains there until the total non-enzymatic hydrolysis of the fish is completed, and this process varies from an absurd 15 to 30 days; and then this hydrolysate is sieved again, this time in a fine sieve and pumped to storage tanks. As can be seen, not only are the process steps absolutely different from those used in the process developed by means of the present invention, but also the time to obtain the product is absurdly longer than the time of a few hours in which the steps included in the present invention are processed.

Similarly, patent document PI06049109 comprises an organic product based on fish, particularly a liquid product, whose field of application is focused on the fertilizer segment, more directly as a foliar fertilizer, which may, depending on the type of crop, be treated, be applied only once, or a few times, for example, before flowering and afterwards, according to the recommendations for that specific type of crop. Generally speaking, this organic product is based, in its basic version, in a product obtained from the fermentation of fresh fish, glucose and the seeding of a fungus, activated by controlled solar energy. As can be seen, the document does not comprise a hydrolysis reaction and preparation of the product as completely and optimally as in the present invention, in addition, the invention does not use glucose or fungi in its execution.

Still, document CN1493683 approaches, in a similar way to the approach of document PI06049109, the use of fungi for the decomposition of agricultural residues. Not only is the purpose of use absolutely different from the present invention, as well as the mechanisms that are used are diametrically opposed.

It is still relevant to mention document CN201910717726, which describes a fertilizer composition that contains protein powder obtained from fish, in the midst of a composition that includes the addition of nitrogen, phosphorus and vegetable hormone (brassinolide). In this scenario, both the composition has characteristics and compounds different from that comprising the product obtained from the present invention, as well as the document does not describe a process for treating fish waste that makes it possible to obtain a composition with fertilizer characteristics.

Also mentioned are the Brazilian documents PI 0704583-2, PI 0503277-6 and BR 112019018387-6, which address methods of manufacturing organ mineral fertilizers from mixtures of different materials, each with particularities of process steps, contents and parameters that distinguish them greatly from the process now claimed.

There are other state-of-the-art documents that address processes comprising the use of by-products of animal origin, although they are diametrically different from those of the process comprised in the present invention.

Document CN109232076, for example, comprises an organic fertilizer obtained from a series of by-products, including pig viscera associated with eggshells and fruit waste, in addition to potassium sulfate and controlled-release fertilizer formulations. The document not only uses absolutely different raw materials, but also uses complementary means and ingredients that completely distance it from the claimed invention. Similarly, document CN104193447 comprises a fertilizer formulation that uses, among various ingredients, such as bentonite, calcium superphosphate, viscera powders, without detailing the use of poultry viscera, as is done in the present invention. In addition, the document is only aimed at increasing the selenium content in the product, unlike the present invention, which aims to obtain a multi-application product, based mainly on particular increments of amino acids, total organic carbon, and organic matter content.

Patent document US 10023887, for example, presents a method to produce an amino acid composition from by-products of animal origin. In addition to the document in question not dealing in detail with the use of poultry viscera, the process appears to be too simplified, unable to generate products similar to those of the process developed here. Additionally, the same document US 10023887 comprises the use of different by-products of animal origin using a reactor called "nanobubble generator", which in itself differentiates the process proposed herein. The document does not face the challenge of dealing with poultry viscera, which requires different stages and the development and construction of mechanisms that allow obtaining a product with high added value, which the said document does not address, unlike the present document.

Similarly, document JPH09208351 comprises a comprehensive treatment process for animal by-products with a focus on reducing the bad odor from these materials. There is no particular treatment of poultry viscera waste. Document KR20170104760 addresses the same topic with similar objectives as the Japanese document, but comprises a solution that involves solid-liquid separation and spraying steps that are far removed from the proposed solution.

In this same area, the Chinese document CN109095966 intends the processing of various organic residues, not specifying, as in the other documents mentioned, the treatment of poultry viscera. The product described by the same document is presented as a foliar fertilizer, and the product obtained through the development claimed herein is not restricted to this application.

Also mentioned are the Brazilian documents PI 0704583-2, PI 0503277-6 and BR 112019018387-6, which address methods of manufacturing organ mineral fertilizers from mixtures of different materials, each with particularities of process steps, contents and parameters that distinguish them greatly from the process now claimed.

There are other state-of-the-art documents that address processes involving the use of by-products of animal origin, although they are diametrically different from those of the process included in the development presented here.

Document CN109232076, for example, comprises an organic fertilizer obtained from a series of by-products, including pig viscera associated with eggshells and fruit waste, in addition to potassium sulfate and controlled-release fertilizer formulations. The document not only uses absolutely different raw materials, but also uses complementary means and ingredients that completely distance it from the claimed technology. Similarly, document CN104193447 comprises a fertilizer formulation that uses, among various ingredients, such as bentonite, calcium superphosphate, viscera powders, without detailing the use of poultry viscera, as is done in the present development. In addition, the document only aims to increase the selenium content in the product, unlike the process developed, which aims to obtain a multi-application product, based on particular increments of amino acids, total organic carbon, and organic matter content, mainly.

With regard to the results of using the product obtained in the developed process, it is relevant to point out that the use of compositions rich in amino acids such as those of the present technology is efficient in reducing the effective amount of fertilizers used, by increasing production and resistance to stress caused by temperature and water deficit.

Certain amino acids can act as plant protectors against the action of mineral salts and other agrochemicals or, on the contrary, increase the absorption and effect of these products. Amino acids can form complexes with cations such as Zn, Cu, Mn and Fe, protecting them and increasing their availability to plants.

One can highlight, among the amino acids, for example, tryptophan, precursor of the most important hormone for root and shoot growth of plants, auxin. Methionine, precursor of ethylene, responsible for fruit maturation. Tyrosine and phenylalanine are the precursors of phenolic compounds involved in plant defense and in the synthesis of lignin, which increases plant lodging resistance.

Glycine is a precursor of chlorophyll synthesis, in addition to acting on the defense mechanisms of cultures. Focused on initial development, valine directly affects seed germination and arginine acts on root development and increases nutrient solubility and absorption, being the main translocation amino acid in the phloem.

It should be noted that the best responses to the use of amino acids in fertilizer compositions, such as that obtained through the process developed, have been in situations of biotic stress, such as those related to the attack of pests and diseases, and abiotic ones, such as nutritional disorders, climate, deficiencies hydric or stress related to the application of pesticides, especially herbicides, giving amino acids the title of anti-stress agents.

In soybean crops, for example, that have symptoms of phytotoxicity, it is possible to obtain a clearly positive result from the spraying of foliar fertilizer with amino acids.

In foliar application, the benefits extend from vegetative development to grain filling, culminating in increased productivity. In addition, the synergism between the application of nutrients and the use of amino acids adds to this practice the benefits of better mineral nutrition for plants. And it should be noted that such synergy is obtained from the use of a single raw material and in order to obtain a natural product, of renewable and sustainable origin.

Additionally, arginine contributed to the increase of chlorophyll in the leaves and delayed aging, thus improving the performance of photosynthesis. Glutamate in soy, for example, indicates that this amino acid provides an increase in the root system, in the nutrient absorption area, as well as in the contact area for plant nodulation to occur.

Proline works as a stress reducer in plants. It amplifies stress tolerance, increases sugar content and carbohydrate reserve, works as a regulator of intracellular osmotic potential by activating stomatal water absorption, stimulates protein synthesis, photosynthesis and increases tolerance to fungal attacks.

Methionine is a precursor of ethylene in higher plants, increasing root growth, favoring the assimilation of nitrates and incorporation of sulfur in the plant. Phenylalanine is an intermediate in the biosynthesis of most phenolic compounds. Tyrosine has an important defense action, since it is a precursor of alkaloids against pathogens. It is an important constituent of proteins that act by converting one type of signal or stimulus into another in the cell. It also functions as a receptor for phosphate groups that are transferred through kinase, responsible for modifying other proteins.

The use of fertilizers such as those of the present invention provides an effect on antioxidant metabolism by increasing the activity of anti-stress enzymes, enzymes of resistance to root development and increased grain production.

The essential amino acids for plants, which promote all the listed benefits, are present in optimal amounts in the product obtained, from the sustainable and innovative raw material used, without the need to add them individually. The final product is already naturally rich in essential amino acids, as well as already containing the nutrients that meet the quality requirements of the inspection bodies and also the most demanding fertilizer action requirements, so that no process in the state of the art obtains or demonstrates to obtain such a set of advantages in a fertilizer product resulting from the use of by-products from the processing of fish as raw material.

In this way, the processes and products of the present invention greatly increase the state of the art in the use of amino acids in synergy with fertilizer compounds. The use of the product obtained through the developed process increases the absorption and transport of nutrients, providing high biological availability, high stability and solubility. And, in this way, it is possible to increase the absorption of nutrients via leaves or roots, as well as the transport of nutrients throughout the plant.

It should be noted that the particularization approach of dealing with fish protein concentrates with a focus on the development of a fertilizer with high added value, with significant amounts of total organic carbon and free amino acids, is unprecedented. The development of ideal process steps and parameters to obtain a product that meets the technical requirements demanded by the inspection entities and simultaneously the quality requirements requires significant inventive effort, which resulted in the development of a process that is absolutely superior to the existing alternatives in the state of art for the treatment of fish-based products and by-products and which brings together sufficient innovative characteristics to compose the present application for the privilege of invention.

In addition, the use of a natural raw material, reused from the processing of animals in various industries, means an advance in relation to the origin of synthetic or mineral raw materials commonly used in fertilizer products.

The use of by-products from the fishing industry represents, in conjunction with all other process parameters, a substantial advance in the development of fertilizers originating from natural compounds, resulting in not only a high level of total organic carbon, organic matter and free natural amino acids, but also but of absolutely sustainable origin. Additionally, the multifunctionality of the products that can be obtained from the use of the developed process stands out. Despite the preferential use, but not limiting, as a fertilizer composition, there is the possibility, given the innovative characteristics of the process parameters - in addition to its versatility - for the particular raw material chosen, of use as an ingredient for the development of compositions for animal feed, serving the final product, in an equally versatile way, both for plant nutrition and for use as an ingredient in various animal nutrition compositions, as well as in production processes aimed at delivering supplement or feed formulations, for example.

It should be noted that the particularization approach of treating poultry viscera with a focus on the development of a fertilizer with high added value, with high and specified amounts of total organic carbon and free amino acids, is unprecedented. The development of ideal process steps and parameters to obtain a product that meets the technical requirements demanded by the inspection entities and simultaneously the quality requirements requires significant inventive effort, which resulted in the development of a process that is absolutely superior to the existing alternatives in the state of art and that brings together sufficient innovative characteristics to compose the present application for a certificate of addition of invention.

### SUMMARY OF THE INVENTION

This fertilizer production process is part of the theme of industrial biotechnology, covering the modern application of biotechnology for the sustainable processing and production of chemical products, fertilizers, materials, fuels, animal nutrition and others. It is a suitable technique to improve the functional properties of proteins, including emulsifying capacity and solubility, in addition to increasing the antioxidant capacity by exposing antioxidant amino acids present in the protein chain. One of the differentials of the invention is precisely the raw material used, fish by-products of the sardine species, whole fish, fish parts, accompanying fauna and fish waste from farms, a by-product reused to become a natural source of nutrients for plants, therefore, it is a sustainable process and product that greatly benefits the environment. Additionally, the product obtained has characteristics that enable it to be multiplied, such as an ingredient for animal feed.

More particularly, the invention is based on enzymatic processes, in which chemical reactions are carried out in various stages of the process under different conditions of temperature and time, resulting in sustainable products with high added value and with sanitary guarantees, before the sterilization of the final product. It should be noted that the present process includes a pre-treatment stage of the raw material, which makes the subsequent stages of transformation of the fish aggregate into products rich in amino acids, to be carried out in order to obtain a product with optimal characteristics.

The fertilizer production process proposed herein comprises the use of innovative raw materials, which are fish by-products, which may be of any species, such as sardines, tilapia, among others. It should be noted, in alternative configurations of the invention, the possibility of using as raw material, the whole fish, part of fish, as well as accompanying fauna and residues in general from fish from farms.

The pre-treatment of the mentioned raw material of by-products of by-products of the fishing industry, comprises obtaining an intermediate product called fish concentrate (CPX).

The fish concentrate (CPX) is obtained in the process of producing flour from cola water called the wet process. CPX is rich in protein, natural amino acids, nitrogen and organic carbon.

It can be produced from fish waste of the sardine species, whole fish, parts of fish, and fish waste from farms, which may include, in addition to organic matter from fish waste, matter present in the accompanying fauna. The process begins by transferring the concentrate produced to the process reactor for the enzymatic hydrolysis of the proteins. In the hydrolysis reactors, the enzyme and other products of the formula are added, in this phase the concentrate is subjected to ideal conditions of pH, temperature and reaction time. From this processing, where enzymatic reactions and protein hydrolysis will occur, the proteins present in CPX are converted into amino acids, leaving free other elements, such as organic carbon.

At the end of the hydrolysis reaction, the temperature is raised to inactivate the enzyme and to eliminate biological contaminants. Then the product is stabilized with phosphoric acid, antioxidants and antifungals to protect the final product.

From CPX processing, there are optimal conditions for obtaining a product that can be used as fertilizer, either in powder or liquid form, whether foliar or in the soil, or as a pre-product or precursor for the development of fertilizers added with macronutrients and/or micronutrients or with other elements of interest to the end user. Complementarily, the product can be used as an ingredient in production processes of compositions for animal nutrition, as an ingredient that can be functional and of high nutritional value.

The process of producing fertilizers with poultry viscera directly and/or protein concentrates from poultry viscera obtained from these same residues is done with the pre-treatment of the raw material of poultry viscera, comprising obtaining a concentrate of viscera of birds (CVA).

Poultry viscera concentrate (PAC) is obtained in the process of producing poultry viscera meal called the wet process. As an alternative configuration, it is assumed that the CVA can be produced from poultry waste or even whole birds such as chickens, turkeys, chickens and quails.

The process begins by transferring the concentrate to the process reactor for the enzymatic hydrolysis of the proteins. In the hydrolysis reactors, the enzyme and other products of the formula are added, in this phase the concentrate is subjected to ideal conditions of pH, temperature and reaction time. From this processing, where enzymatic reactions and protein hydrolysis will occur, the proteins present in CVA are converted into amino acids, leaving free other elements, such as organic carbon.

At the end of the hydrolysis reaction, the temperature is raised to inactivate the enzyme and to eliminate biological contaminants. Then the product is stabilized with phosphoric acid, antioxidants and antifungals to protect the final product.

From the processing of poultry viscera concentrate, there are optimal conditions for obtaining a product that can be used as a fertilizer, either in powder form, liquid, foliar or in the soil, or as a pre-product or precursor for development of fertilizers added with macronutrients and/or micronutrients or with other elements of interest to the end user. Complementarily, the product can be used as an ingredient in production processes of compositions for animal nutrition.

It should be noted that the main elements of interest for increasing the final product in the form of fertilizer compositions are: calcium, magnesium, sulfur, boron, chlorine, cobalt, copper, iron, manganese, molybdenum, nickel, silicon and zinc, but not limiting these.

### BRIEF DESCRIPTION OF THE FIGURES

Since the present invention involves obtaining innovative results from the process developed against the state of the art, it is essential to demonstrate in images the main stages, illustrations of the product and equipment involved, which is done through the figures that integrate the present patent application.

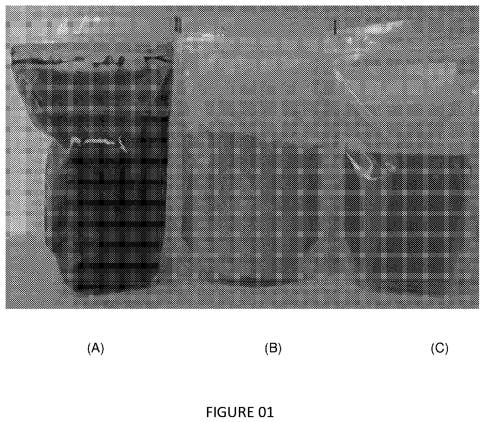

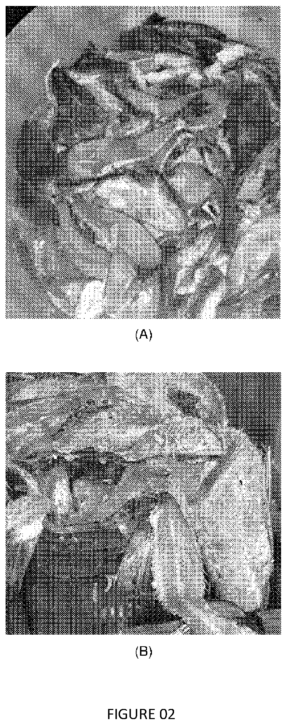

Thus, for a better understanding of the present invention, it was illustrated in Figures 01 and 02, not being the objective of these graphic representations to restrict the macro steps of the process and/or the multiple forms of related execution, as well as the multifunctionality of the product obtained.
Figure 01 illustrates the by-products obtained during the preparation of the fish concentrate (CPX) and including the subsequent processing to obtain the fertilizer composition, in (A) an image of the liquid product obtained at the end of the process of the present invention is observed, in (B) the product with fertilizer characteristics is observed in powder obtained at the end of the developed process, after drying in Spray Dryer and in (C) the fish oil that is extracted in the pre-treatment of the raw material, during the obtaining of the CPX.
Figure 02 shows images of the residues that can be processed in the process of the present invention. In (A) image of fish residues of marine origin and in (B) image of fish residues in general.

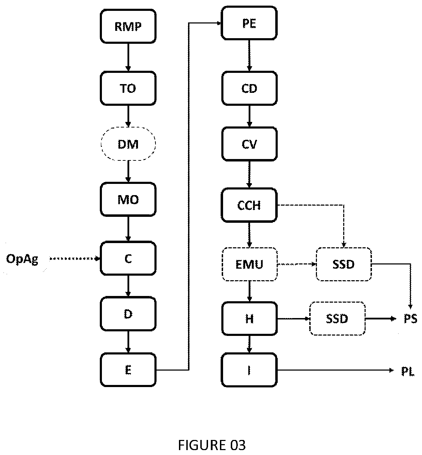

Figure 03 illustrates a simplified process diagram that aims to exemplify an alternative configuration of the process of the present invention, which refers to the route-optimized enzymatic hydrolysis reaction with minimal pre-treatment and capable of comprehensive processing of waste and/or waste, raw materials containing proteins of animal origin. In Figure 3, the steps, products and additives illustrated are:
   - Raw material reception (RMP): poultry slaughter by-product, mechanically separated meat (CMS), livers, whole poultry and fish slaughter residues, and whole fish. The raw material must arrive at the factory fresh, within a maximum period of 24 hours after the slaughter of the animals.
   - Crushing (TO): the raw material must be crushed into pieces of approximately 25 cm in size.
   - Metal detector (DM) installed before the material enters the next grinding stage.
   - Grinding (MO): after crushing, the raw material must be ground in a specific grinder with a sieve with a maximum hole of 8.00 mm, to ensure that the mass is fine.
   - Enzymatic hydrolysis (C), considering that in this configuration of enzymatic hydrolysis, the process options are the same described in the item that deals with the detailed description of the invention, with the difference of the optional addition of water (OpAg) to the hydrolysis reaction medium, directly in the hydrolysis reactor, the water must be weighed in the load cells of the reactor itself, in an amount of up to 20% of water in relation to the total amount of material in the reactor.
   - Inactivation of the enzyme (D), according to the detailed description of the invention.
   - Sterilization of the product (E), in accordance with the steps presented in the detailed description of the invention.
   - Sieving (PE): after the product is hydrolyzed and sterilized, it must be pumped for sieving with 2.00 mm mesh sieves to separate coarser solid parts.
   - Centrifugation (CD): after sieving, the product must be centrifuged in a Decanter to separate the oil.
   - Centrifugation in vertical centrifuges (CV): after centrifuging the product in a Decanter, it must be centrifuged in a vertical centrifuge (plates) to separate fine solids and fat, if any.
   - Hydrolyzed broth concentration (HCC): concentrated in evaporators to raise the dry mass concentration to values between 30.00% and 56.00 ° Brix.
   - Emulsification (EMU): from the installation of a suitable pump in the stabilization tank (step H), it is possible to carry out the optional emulsification of the product, which is carried out mainly when there are high levels of fat and when the process aims at obtaining fertilizer compositions.
   - Stabilization of the liquid product (H), in accordance with the detailed description of the invention.
   - Drying in Spray Dryer (SSD): can be performed before or after stabilization (H) of the product, that is, immediately after obtaining the hydrolyzed broth concentrate or after its subsequent stabilization, thus obtaining the product in powder form (PS).
   - Addition of preservatives (I): after pH adjustment, during stabilization (H), when the product is not dried to obtain it in powder form, preservative products, such as antifungals and antioxidants, can be added in the recommended amount by the manufacturer of the product, thus obtaining the product in liquid form (PL).

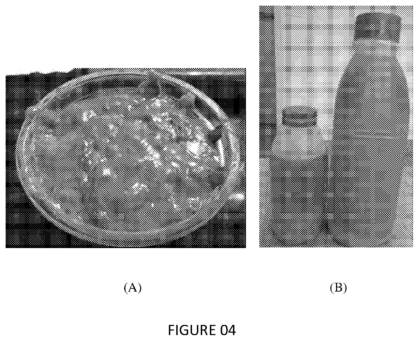

Figure 04 illustrates the by-products obtained during the preparation of the poultry viscera concentrate (CVA), in (A) an image of the ground viscera is observed and in (B) the viscera oil that is extracted in the pre-treatment of the raw material.

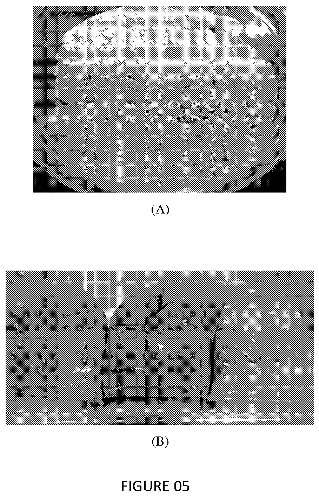

Figure 05 shows an image of the powdered product obtained after drying in a Spray Dryer. In (A) image of the product immediately after obtaining it and in (B) image of the packaged product. Both images demonstrate the physical aspects of dry product uniformity.

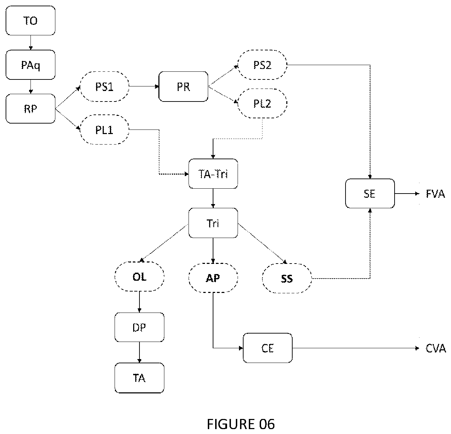

Figure 06 illustrates with a simplified process diagram the pre-treatment stage of the poultry viscera raw material, which contains the central stages of the claimed process, where:
   - TO - shredder, where the raw material of poultry viscera is crushed, after carrying out sensory analyzes on receipt of poultry by-products and confirmation of the presence of odor and appearance of healthy, clean and fresh material, in addition to confirmation of origin of animal waste transport documents issued by the supplier proving its origin. It is also important to point out that before arriving at the TO, the viscera are transported to the raw material reception area and the discharge occurs by hydraulic platform, without human contact, culminating in the deposit in the reception hopper. Additionally, in the reception hopper, 50 mL of antioxidant compound is dosed directly into the hopper per ton of poultry viscera raw material, only then is the content of the reception hopper transported to the crusher (TO). As antioxidant agents, pure BHT or products that form a blend or, additionally, but not limitingly, formaldehyde-based preservatives can be used.
   - PAq - Pre-heater, to which the crushed product is directed, the crushed mass being subjected to a temperature of 90°C to 96°C, where it remains for a time of 15 to 20 minutes. The product runs through the entire extension of the pre-heater, which takes about an hour in all, and during this time the application is applied for about 20 minutes at a temperature in the indicated range (90 to 96°C).
   - RP - Screw percolator, through which the preheated mass, also called cooked mass, passes.
   - PS 1 - Solid portion obtained from passing the cooked mass through RP.
   - PL1 - Net portion obtained from passing the cooked dough through RP.
   - PR - Press, where PS 1 is pressed.
   - TA-Tri - Tridecanter Feeding Tank, which has its temperature maintained between values of 90 to 95°C;
   - PL2 - Net portion obtained after pressing (PR).
   - PS2 - Solid portion obtained after pressing (PR).
   - Tri - Tridecanter.
   - OL - Portion of oil obtained from the Tridecanter.
   - AP - Portion of water and proteins obtained from the Tridecanter, which is also known as cola water.
   - SS - Portion of solids obtained from the Tridecanter.
   - DP - Decantation and purge boxes to which the OL portion is directed.
   - TA - Storage Tank for the OL parcel, from which it is ready for commercialization.
   - SE - Dryer, to which the PS2 and SS plots are submitted.
   - FVA - Poultry Viscera Flour, obtained from the drying stage.
   - EC - Evaporation Column, which is submitted to the PA portion, in which a concentrate with a minimum of 30° brix is obtained.
   - CVA - Poultry Viscera Protein Concentrate, obtained after evaporation/concentration in EC. It should be noted that the CVA is subsequently sent to storage tanks and preservatives can be added for this purpose, thus ending the pre-treatment of the raw material from poultry viscera waste.

### DETAILED DESCRIPTION OF THE INVENTION

### FERTILIZER FROM BY-PRODUCTS OF THE FISHING INDUSTRY

The fertilizer composition developed from the process of the present invention comprises, as raw material, from fish by-products of the sardine species, whole fish, fish parts, accompanying fauna and fish waste from farms.

CPX is rich in protein, natural amino acids, nitrogen and organic carbon. CPX is obtained from the indicated raw material, and is produced through a process of obtaining fish meal, called wet process.

All raw material is inspected and tracked in compliance with the requirements of the Ministry of Agriculture, Livestock and Supply and environmental agencies. It is important to point out that heavy metals are not used at the origin of the raw material, with no risk of contamination of the final product.

The CPX produced is collected directly at the production unit in its own tank trucks. Upon arrival at the fertilizer factory, the loads are inspected to verify the quality and where the unloading of the product is arranged.

The concentrate is then pumped into stainless steel receiving tanks and kept homogenized until processing. The pump used in this phase of the process must be models suitable for dense or viscous compounds. A helical pump, also known as a NEMO Progressive Cavity pump, or even a sanitary stainless steel centrifugal pump can be used.

For processing, the concentrate is pumped into reactors where chemical reactions will take place. This process takes place with indirect steam at different temperature ranges, being fully automated and closed, preventing manual contact and cross contamination of raw materials and products.

The production areas and equipment receive pre-operational and operational cleaning, following the instructions of the standard cleaning procedures, developed and inspected by the quality control of each plant. In addition, hygiene is carried out using efficient products duly authorized by Organs competent bodies.

The final product is monitored in terms of physical and chemical analyses: moisture, ethereal extract, mineral matter and Brix degree, mainly with analyzes carried out by production batch, with analyzes carried out in an internal laboratory or in laboratories contracted for this purpose. At the end of the production process, the expiry date and batch number are written on the printed label. In all products obtained from the poultry viscera concentrate process, there is a minimum guarantee of 3% organic carbon and 3% macronutrients (NPK).

In the plant where the process takes place, there is permanent care for the maintenance of facilities and equipment, changing rooms and sanitary barriers, lighting, ventilation, supply water, waste water and solid waste, pest control, cleaning and sanitation, employee hygiene and health, standardized operating procedures, raw materials, supplies and packaging, temperature control, calibration and measurement, laboratory controls in general and traceability.

In the case of the product obtained by this process, it should be noted the requirements arising from official legislation (IN 25, of July 23, 2009), which indicates that use is allowed in pastures and weeds only with soil incorporation. In the case of pastures, allow grazing only after 40 days after incorporating the fertilizer into the soil. Its use is also prohibited in feeding ruminants, and the product must be stored in a place protected from access by these animals.

As the first stage of the developed process, there is the treatment of the raw material of fish waste that can be added including whole fish, both of origin in any species, such as sardines, tilapia, among others, for the production of protein concentrate of fish (CPX).

For the selection of raw material suppliers to obtain the CPX, it is considered essential that the establishment be duly registered with the competent body and present good hygiene and safety conditions in obtaining and supplying by-products. The raw material is composed of whole fish, fish parts and accompanying fauna. Potential suppliers of this material include fish processors, fishmongers and maritime receiving points.

The raw material is transported in its own trucks, hermetically sealed, isothermal and without the possibility of leaks, these trucks being destined solely and exclusively for the transport of this type of fish material, not being allowed the transport of other animal species in the same.

When the trucks arrive at the processing company, they are taken to the raw material receiving area, where they are first inspected by trained personnel, assessing the odor and the visual appearance of the material still inside the vehicle. The raw material must have an odor and appearance of healthy, clean and fresh material and be accompanied by an animal waste transport document issued by the supplier. After this inspection, they are unloaded in a closed place with gas exhaustion. Unloading is carried out using a mechanical dumper, where the loaded truck is tilted at an angle of approximately 45°, allowing the material inside to be poured into a stainless-steel hopper located below the dumper.

Once in the hopper, the material is again inspected for odor and visual appearance, and then transported through screws for processing.

The raw material from the receiving hopper is taken to a pre-cooker to go through the pre-cooking stage (PC), where it is heated via indirect steam for 1 hour. In the PC, the raw material will be subjected to a temperature in the range of 90 to 96°C, for 15 to 20 minutes, and the time between the product entering and leaving the pre-cooking equipment is one hour, due to process to be continuous.

This step promotes protein coagulation and fat detachment.

After exiting the pre-heater, the cooked mass passes through a percolating screw (RP), where the first separation takes place between solids (material that still has fat) and liquids, which consist of water, solids and fat.

The solid part (PS1) also called cooked mass goes to the press and the liquid part (PL1, consisting of water, solids and fat) will go to the Tridecanter feed tank (TA-Tri), where it will remain at a temperature between 90 to 95°C. The liquid part (PL2) that was extracted from pressing is also directed to the Tridecanter feed tank and subsequently pumped to the Tridecanter.

In the Tridecanter there will be a separation of three phases: (i) oil, (ii) water and proteins, a mixture known as cola water and (iii) solids. The oil is directed to the boxes for decanting and purging and later to the tank where it is ready for sale. The dregs (iii - solids) are directed to the dryer, where they will mix with the pressed mass for the manufacture of poultry viscera flour.

The water and proteins (ii), which is the glue water, which leaves the Tridecanter, is directed to the evaporation/concentration plant, where it will be concentrated and can reach up to 35° Brix, preferably 30° Brix, thus obtaining the concentrate of fish (CPX), which is then pumped to the storage tanks, completing the initial stage of pre-treatment of the raw material. Antioxidant may be dosed in the final product for conservation.

The evaporated water extracted from this pre-treatment process is directed to the respective treatment plant.

Starting from the CPX, the CPX is then transferred to the hydrolysis reactor by pumping, considering that the quality of this concentrate is especially important for the results of the final product, which is why the pre-treatment stage was developed in a particular way to provide such quality for products derived from fish residues. It is important to mention that for the hydrolysis of poultry viscera concentrate it is not necessary to add water, the water itself contained in the raw material is sufficient for the hydrolysis reaction.

Prior to carrying out the hydrolysis reactions, the CPX solution must undergo an emulsification step, and this procedure takes place under agitation and recirculation of the product in the reactor itself with a suitable pump. This stage is important for the final product to become uniform, not allowing the formation of phases, so that it does not separate into more than one phase. It is noteworthy that the most suitable enzymes for the hydrolysis process in question are the proteases, which perform well at different pH values.

As for the hydrolysis reactor, it must be made of stainless steel and jacketed, that is, heating must be with steam in the jacket. The internal shaft must be equipped with its own stirrer for perfect homogenization of the solution. Also, instruments necessary for the operation are: load cells, thermometers, pH sensors and solenoid valves for controlling the steam in the reactor jacket. The pH and Temperature sensors must be installed at the bottom and top of the reactor in order to have process control. And, for better steam control in the reactor jacket, a solenoid valve must be installed in the steam inlet network to maintain the established constant temperature. The load cells must be installed on the reactor support feet so that the raw materials that make up the product formula can be weighed, which must be in precise quantities. In this reactor, protein hydrolysis reactions are carried out, transforming them into amino acids and leaving free other elements, such as organic carbon. The pump used at this stage of the process must be specific for compounds that may contain bones in the middle of the waste, such as poultry viscera. The pump model suitable for this process is the helical pump, also known as the NEMO Progressive Cavity pump.

Considering the above, from the pre-treatment of the raw material of fish waste and/or whole fish and obtaining the CPX, there are the following steps:
A) Pumping the CPX into the hydrolysis reactor(s).
B) Emulsification of the solution obtained, by activating the stirrer, with subsequent use of steam to heat the solution and activating the emulsification pump to recirculate the mixture inside the reactor itself.
C) Enzymatic hydrolysis reaction, with adjustment of parameters according to one of the three configurations below, choosing one of them and processing before following the procedures. It is important to point out that the pH measurements must be constant during the entire hydrolysis time, if there is a variation, the pH must be immediately corrected to the recommended range. The pH measuring instruments must be installed at the bottom and top of the hydrolysis reactor, ensuring that the sensor is in contact with the product in order to have control of the process.
   The settings are:
   C1. Enzymatic hydrolysis in alkaline medium: the enzyme indicated for the process is alkaline protease, with the amount of enzyme to be added being 0.5% in relation to the total mass to be processed. The enzyme is added when the temperature reaches 40°C, and then kept between 40 and 70°C, preferably at 65°C. As for the pH, it is recommended to keep it between 7.50 and 11.00, with the optimum working range being 8.00 and 9.00, and preferably the pH should be kept close to 8.50. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 3 hours, with an average time of 2 hours for the enzyme to transform proteins into free amino acids.
   C2. Enzymatic hydrolysis in an acid medium: the enzyme indicated for the process is acid protease, with the amount of enzyme to be added being 0.5% in relation to the total mass to be processed. The enzyme is added when the temperature reaches 40°C, and then kept between 40 and 65°C, preferably at 60°C. As for the pH, it is recommended to keep it between 2.00 and 6.00, with the optimum working range being 2.50 and 4.50, and preferably the pH should be kept close to 4.00. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 3 hours, with an average time of 2 hours for the enzyme to transform proteins into free amino acids.
   C3. Enzymatic hydrolysis in neutral medium: the enzyme indicated for the process is neutral protease, with the amount of enzyme to be added being 0.5% in relation to the total mass to be processed. The enzyme is added when the temperature reaches 40°C, and then kept between 40 and 60°C, preferably at 55°C. As for the pH, it is recommended to keep it between 5.50 and 9.50, with the optimum working range being 6.50 and 7.50, and preferably the pH should be kept close to 7.00. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 3 hours, with an average time of 2 hours for the enzyme to transform proteins into free amino acids.
D) Enzyme inactivation: after the hydrolysis period, it is necessary to raise the process temperature to 90°C for 30 minutes to inactivate the enzyme.
E) Product sterilization: after enzyme inactivation, keep the reactor heated at 90°C for another 30 minutes to eliminate the biological agents, totaling the inactivation and sterilization time of one hour.
F) Filtration: at the end of the hydrolysis process, the product must be filtered and sent to the acidification tank to finish the product.
G) Cooling: in the acidification tank after inactivation and sterilization, the product must be cooled to a temperature of 70 °C.
H) Stabilization: in the stabilization tank, the product must be allowed to cool down to a temperature below 70 °C, in this temperature range adjust the pH between 2.50 to 3.50. The pH correction must be carried out with the addition of phosphoric acid, NaOH or KOH. It is important to keep the pH close to 3.00 for the stability of the product, so that it has more durability, especially in liquid form. If an organ mineral fertilizer is to be obtained as a product, phosphoric acid must be used in this step. If a simple organic fertilizer is to be obtained as a product, phosphoric acid is not used in this step. Hydrochloric acid or citric acid can also be used as acid reagents for pH adjustment up to 3.0. Preferably, pH correction should be performed with the addition of industrial or food grade phosphoric acid to lower it; or NaOH or KOH to elevate it, as needed.
I) Addition of preservatives: after pH adjustment, during stabilization, add preservative products, such as antifungals and antioxidants in the amount recommended by the product manufacturer.
J) Storage: the product must be stored in stainless steel material tanks. K) Packaging: the product can be packaged in 50-liter drums, 1,000-liter containers or delivered in bulk in tank trucks.

Optionally, the process may comprise obtaining fertilizer compost in powder form. Thus, alternatively, after the stabilization step, it is possible to direct the intermediate obtained to the drying process in a Spray Dryer in order to obtain a solid, as well as it is possible, optionally, the addition of macro or micronutrients at the end according to the desired application. The drying of the product, in this case, is carried out in the Spray Dryer equipment. The liquid product is pumped to the disk or spray nozzle and then to the drying chamber. The ideal operating temperature in the Spray Dryer's drying chamber is 170°C to 200°C, preferably 180°C at the inlet and 100°C to 120°C, preferably 110°C at the outlet. As commonly used in the industry, the operation of the Spray Dryer relies on the spraying of product particles in its chamber, being subjected to a controlled stream of hot air. Together with these processes, the vaporization of the water contained in it takes place, and consequently the ultra-fast separation of solids and soluble. Based on the defined parameters, it is possible to obtain a product in powder form, with moisture content below 5%. Drum Dryers can also be used in this step as an alternative embodiment of the invention.

All processes are carried out with minimal degradation of the drying product, as the Spray Dryer places the solvent under a controlled temperature for seconds and this causes the solvent to evaporate instantly with a minimal rise in the temperature of the wet material. And, in the case of the developed process, it is not trivial to use the selected temperatures in question, at the entrance and exit of the drying process, which demonstrated, together with the other process parameters, to be synergistically integrated with the optimal conditions for obtaining a powdered product that does not require grinding and is ready for subsequent filling after cooling to room temperature. The use of the Spray Dryer under these conditions eliminates the occurrence of a negative impact on the chemical and physical properties of the product, and it is also possible to improve these properties since the procedure stabilizes the final product obtained.

Still in the case of the solid product in powder form, the process described takes place in the stabilization stage still in the liquid state as explained, considering the pH range (3.00) with adjustment with phosphoric acid, preservatives and antifungals. However, in the case of powdered fertilizer, the aforementioned adjustment to a pH equal to 3.00 is optional, and thus the addition of phosphoric acid is also optional, that is, if you want to make a product with a low phosphorus content, it is not necessary. add phosphoric acid. Because the humidity is low, the product will have a long shelf life without the need to adjust the pH to 3.00. However, even without this need, if you want a product previously enriched with phosphorus, you can proceed with the stabilization step using phosphoric acid as already described.

All descriptions presented herein are illustrative and illustrative of the innovative development that represents the process, product and use herein claimed. Therefore, there should be no restriction of the process to the elements described herein. It is a process of renewable, sustainable origin, which transforms products that would be discarded into base material to obtain compositions rich in essential amino acids for plants, of natural origin, based on the use of fish waste, which would be discarded by the fishing industry.

As an alternative configuration of the invention, it should be mentioned that the enzymatic hydrolysis reactor employed is not limited to operation at atmospheric pressure. In other words, it is possible to use a pressurized environment to obtain the benefits arising from the optimization of the enzymatic hydrolysis reaction. Still as alternative configurations of the present invention, it is possible to use advanced techniques in conjunction with the enzymatic hydrolysis reaction, such as those related to the exposure of the reaction system to ultrasonic waves.

It is important to emphasize that the process is free of heavy metals, which eliminates the risk of contamination in the final product. With regard to the organic matter content, mainly, as well as the other physicochemical characteristics of the product obtained through the developed process, there are the following differentials:
- In the product obtained in liquid form, by the main route, without processing to obtain the powder via Spray Dryer, it is possible to guarantee a minimum of 17% of total amino acids.
- In the product obtained in powder form, by the alternative route that includes sending it for drying in a Spray Dryer, it is possible to guarantee a minimum of:
- 54% of total amino acids;
- 7% nitrogen;
- 36% organic carbon; and
- 80% organic matter.

Seeking to base and illustrate the characteristics of the products that can be obtained by the claimed process, the following tables are presented, comprising:
- Table 1 - Aminogram of the hydrolyzed fish protein concentrate sample, after hydrolysis;
- Table 2 - Aminogram of the powdered fish hydrolysate obtained after carrying out the process using the alternative route, including drying in a Spray Dryer; and
- Table 3 - Complete analysis report and sample C/N of the liquid organic fertilizer product considering the soil application; and
- Table 4 - Report of complete analysis and C/N of sample of the liquid organic fertilizer product obtained through the process of the invention considering the foliar application.

**Table 1 - Test Report - Fish Protein Concentrate Sample - After Hydrolysis - Aminogram**

| Essay | Result | Unit |
|---|---|---|
| Crude Protein | 21.68 | (g/100g) |
| Dig. (Pepsin 0.002%) | 100.17 | (g/100g) |
| E.E. Acid Hydrolysis | 0.85 | (g/100g) |
| Moisture-Loss by Desiccation- | 68.27 | (g/100g) |
| Dry Matter | 31.13 | (g/100g) |
| Mineral Matter | 8.96 | (g/100g) |
| Calcium | 0.0406 | (g/100g) |
| Total Phosphorus | 2.5405 | (g/100g) |
| Alanine | 1.4529c | (g/100g) |
| Arginine | 1.2286c | (g/100g) |
| Aspartic Acid | 1.1824c | (g/100g) |
| Glycine | 2.4368c | (g/100g) |
| Isoleucine | 0.3780c | (g/100g) |
| Leucine | 0.9394c | (g/100g) |
| Glutamic Acid | 2.3811c | (g/100g) |
| Lysine | 1.4523c | (g/100g) |
| Methionine | 0.3064c | (g/100g) |
| Phenylalanine | 0.4705c | (g/100g) |
| Tyrosine | 0.2031c | (g/100g) |
| Threonine | 0.4786c | (g/100g) |
| Tryptophan | NOT DETECTED | (g/100g) |
| Proline | 1.2078c | (g/100g) |
| Hydroxy Proline | 0.8214 | (g/100g) |
| Valine | 0.5359c | (g/100g) |
| Histidine | 0.8132c | (g/100g) |
| Serine | 0.5736c | (g/100g) |
| Sodium | 9,095.7600 | (mg/Kg) |
| Potassium | 9,641.0500 | (mg/Kg) |
| Peroxide Index | NOT DETECTED | (mEq/Kg) |
| Acidity Level | 0.08 | (mgNaOH/g) |
| Total Coliforms | < 3.0 | (NMP/g) |
| *Escherichia coli* | < 3.0 | (NMP/g) |
| *Salmonella sp* | Absent | (25g) |
| *Clostridium Perfringens* | < 10 | (UFC/g) |
| Taurine | 0.5993 | (g/100g) |
| Biogenic Amines | 3262,9273 | (mg/Kg) |

| | | |
|---|---|---|
| - Indicates result twice confirmed by the contracted analysis laboratory. | | |

**Table 2 - Test Report - Fish Hydrolysate - Spray Dryer Powder - Fish Protein Concentrate - Aminogram**

| Essay | Result | Unit |
|---|---|---|
| Crude Protein | 68.71 | (g/100g) |
| Dig. (Pepsin 0.002%) | 100.21 | (g/100g) |
| E.E. Acid Hydrolysis | 3.38 | (g/100g) |
| Moisture-Loss by Desiccation- | 2.54 | (g/100g) |
| Dry Matter | 96.8800 | (g/100g) |
| Mineral Matter | 24.45 | (g/100g) |
| Calcium | 0.0987 | (g/100g) |
| Total Phosphorus | 7.5624 | (g/100g) |
| Alanine | 4.5633c | (g/100g) |
| Arginine | 4.1295c | (g/100g) |
| Aspartic Acid | 3.7056c | (g/100g) |
| Glycine | 7.7346c | (g/100g) |
| Isoleucine | 1.2083c | (g/100g) |
| Leucine | 2.9794c | (g/100g) |
| Glutamic Acid | 7.5281c | (g/100g) |
| Lysine | 4.5031c | (g/100g) |
| Methionine | 1.1953c | (g/100g) |
| Phenylalanine | 1.5126c | (g/100g) |
| Tyrosine | 0.6573c | (g/100g) |
| Threonine | 1.5322c | (g/100g) |
| Tryptophan | NOT DETECTED | (g/100g) |
| Proline | 3.9089c | (g/100g) |
| Hydroxy Proline | 2.6031 | (g/100g) |
| Valine | 1.6517c | (g/100g) |
| Histidine | 2.4578c | (g/100g) |
| Serine | 1.7948c | (g/100g) |
| Sodium | 26,775.6000 | (mg/Kg) |
| Potassium | 28,185.7000 | (mg/Kg) |
| Peroxide Index | NOT DETECTED | (mEq/Kg) |
| Acidity Level | 2.04 | (mgNaOH/g) |
| Total Coliforms | < 3.0 | (NMP/g) |
| *Escherichia coli* | < 3.0 | (NMP/g) |
| *Salmonella sp* | Absent | (25g) |
| *Clostridium Perfringens* | < 10 | (UFC/g) |
| Taurine | 1.9653 | (g/100g) |
| Biogenic Amines | 6615,5921 | (mg/Kg) |

**Table 3 - Test Report - Complete Analysis + C/N (Via Soil) - Sample of the liquid organic fertilizer product obtained through the process of the invention**

| Essay | Result | Unit | LQ |
|---|---|---|---|
| Nitrogen | 3.09 | % | - |
| Total Phosphorus | 10.26 | % | - |
| Potassium (HNO3 + HClO4) | 0.54 | % | - |
| Calcium (HNO3 + HClO4) | 0.02 | % | - |
| Magnesium (HNO3 + HClO4) | 0.2 | % | - |
| Copper (HNO3 + HClO4) | 103.12 | ppm | - |
| Manganese (HNO3 + HClO4) | 0 | ppm | - |
| Iron (HNO3 + HClO4) | 64.29 | ppm | - |
| Zinc (HNO3 + HClO4) | 59.48 | ppm | - |
| Aluminum (HNO3 + HClO4) | 507.5 | ppm | - |
| Sulfur (SO4) | 0.03 | % | - |
| Sodium (HNO3 + HClO4) | 2 | % | - |
| Boron | 0.01 | % | - |
| Cobalt (HNO3 + HClO4) | 99.35 | ppm | - |
| Molybdenum (HNO3 + HClO4) | 121.57 | ppm | - |
| Organic Carbon | 9.05 | % | 0.44 |
| C/N ratio | 3 | - | - |
| Density | 1.16 | g/cm3 | - |
| Humidity (65°C) | 29.1 | % | - |
| Organic Matter | 70.61 | % | - |
| Ashes | 29.39 | % | - |

**Table 4 - Test Report - Complete Analysis + C/N (Leaf route) - Sample of the liquid organic fertilizer product obtained through the process of the invention**

| Essay | Result | Unit | LQ |
|---|---|---|---|
| Nitrogen | 3.09 | % | - |
| Phosphorus (sol. water) | 0 | % | - |
| Potassium (sol. water) | 0.53 | % | - |
| Calcium (sol. water) | 123.08 | ppm | - |
| Magnesium (sol. water) | 135.58 | ppm | - |
| Sulfur (SO4) | 0.03 | % | - |
| Sodium (sol. water) | 2.01 | % | - |
| Boron | 0.01 | % | - |
| Copper (sol. water) | 28.04 | ppm | - |
| Iron (sol. water) | 0 | ppm | - |
| Manganese (sol. water) | 0 | ppm | - |
| Zinc (sol. water) | 55 | ppm | - |
| Aluminum (sol. water) | 420 | ppm | - |
| Cobalt (HNO3 + HClO4) | 6.49 | ppm | - |
| Molybdenum (HNO3 + HClO4) | 109.19 | ppm | - |
| Hydrogen Potential | 3.4 | - | - |
| Density | 1.16 | g/cm3 | - |
| Organic Carbon | 9.05 | % | 0.44 |
| Organic Matter | 69.04 | % | - |
| C/N ratio | 3 | - | - |
| Humidity (65°C) | 29.1 | % | - |

The results presented confirm that the process route developed generates a differentiated product with a wide range of applications, representing a significant advance in the state of the art, mainly due to the innovative use of fish waste submitted to a pre-treatment process to obtain a fish concentrate (PXE). It is important to note that in liquid fertilizer for foliar application, there is a particular natural increase in copper levels. And, similarly, for the application of liquid fertilizer via soil, a natural increase in iron and cobalt contents is observed in comparison with other commercial fertilizers obtained from other raw materials.

Taking into account the possibility of additives to the final product, in one of the alternative configurations of the invention, the following nutrients can be added, with their respective minimum total contents for application in the soil of: Ca (1% in the solid form of the fertilizer and 0.5% in the fluid form); Mg (1% in the solid form of the fertilizer and 0.5% in the fluid form); S (1% in the solid form of the fertilizer and 0.5% in the fluid form); B (0.03% in the solid form of the fertilizer and 0.01% in the fluid form); Cl (0.1% in the solid form of the fertilizer and 0.1% in the fluid form); Co (0.005% in solid fertilizer form and 0.005% in fluid form), Cu (0.05% in solid fertilizer form and 0.05% in fluid form), Fe (0.2% in solid fertilizer form and 0.1% in fluid form), Mn (0.05% in solid fertilizer form and 0.05% in fluid form), Mo (0.005% in solid fertilizer form and 0.005% in fluid form), Ni (0.005 % in solid fertilizer form and 0.005% in fluid form), Si (1% in solid fertilizer form and 0.5% in fluid form), Zn (0.1% in solid fertilizer form and 0.05% in fluid form). One or more of the listed nutrients may be added.

In the case of foliar application, fertigation and hydroponics, the minimum total soluble content in water of additives, which may be one or more of the additives described below, must be: Ca (0.5% in solid fertilizer form and 0.3% in fluid form), Mg (0.5% in solid fertilizer form and 0.3% in fluid form), S (0.5% in solid fertilizer and 0.3% in fluid form), B (0.02% in solid fertilizer form and 0.01% in fluid form), Cl (0.1% in solid fertilizer form and 0.1% in fluid form), Co (0.005% in solid fertilizer form and 0.005% in fluid form), Cu (0.05% in solid fertilizer form and 0.05% in fluid form), Fe (0.1% in solid fertilizer form and 0.02% in fluid form), Mn (0.1% in solid fertilizer form and 0.02% in fluid form), Mo (0.02% in solid fertilizer form and 0.005% in fluid form), Ni (0.005% in solid fertilizer form and 0.005% in fluid form), Si (0.5% in solid fertilizer form and 0.05% in fluid form), Zn (0.1% in fertilizer solid and 0.05% in fluid form).

In an alternative configuration of the invention, the final powder product obtained after drying in a Spray Dryer, given its characteristics, mainly of high levels of amino acids, can be used in animal feed and nutrition, as an ingredient in compositions, and not just for plant nutrition. The sanity of the entire process, in addition to the characteristics attributed to the product resulting from all stages of the process, enables the powder product obtained to be used as a composition element for animal nutrition.

In the case of use as an ingredient in animal nutrition, it is possible to verify a high degree of digestibility of amino acids, and a nutritional composition that configures an ingredient for animal feed or for animal food supplements, with characteristics such as: being hypoallergenic, depending on the molecular size of its compounds, also due to the entire pre-treatment of the raw material, as well as the stabilization and sterilization of the final product; have high protein content, and have high digestibility. In addition, the ingredient for production processes of compounds for animal nutrition can have functional characteristics, in addition to, mainly, having an organic, natural and sustainable origin.

### Alternative Configuration of the Invention - Route-optimized Enzymatic Hydrolysis Reaction with minimal pre-treatment and capable of comprehensive processing of waste and/or raw materials containing proteins of animal origin.

In an alternative and non-limiting embodiment of the present invention, it is possible to directly process the hydrolysis of fish by-products and/or waste, including whole fish. In this regard, the same process applies to poultry waste, such as poultry viscera. This alternative configuration of the present invention allows the production of protein concentrate from raw materials such as those listed directly deposited in the hydrolysis reactor after minimal pre-processing, and additional post-treatment steps, as will be exposed.

As in the case of the preferred route of the present invention, considering the liquid product stabilization step (H), it is necessary to reduce the pH to a value equal to 3.0, preferably using phosphoric acid. However, similarly to the basic process (steps from A to K, considering the intermediate possibility of drying to obtain a powdered product), if a product without phosphorus is chosen, the acid in question must be replaced by Citric acid.

The use of protein hydrolysates from animal sources in specific formulations is an area of growing interest. The industries focused on the development of nutritional compositions for pets, the pets; pig farming and fish farming are the main sectors interested in products that can be used as functional ingredients in food systems from protein hydrolysates such as those obtained in the present invention.

The hydrolysis of food proteins is already a reality in proteins, vegetables, milk and collagen. However, little concrete and detailed work is available on the hydrolysis of chicken, beef, pork and fish proteins.

For this reason, the present invention contemplates a complementary configuration that includes the comprehensive hydrolysis of animal proteins and, with that, seeks to meet the growing market demand for functional products with high nutritional value.

In this alternative configuration, the processing of raw materials is foreseen: fresh poultry viscera and livers, pork livers, fish such as sardines and tilapia residues and others, and the corresponding residues.

The final product can be either in liquid or powder form. Being the same products, they can be configured in: palatability agents for animal feed, products in general with nutritional value for animals, organic fertilizers, simple organic and organ minerals, and foliar fertilizers.

The process of this alternative configuration foresees, as well as that of the preferential route, foresees the use of industrial biotechnology, and enzymatic hydrolysis reactions, as previously demonstrated. There are several process steps under ideal conditions to obtain a product with high digestibility, solubility, low fat, high protein, low mineral matter, free amino acids and health guarantees, since the product is sterilized.

Considering the route already described for this process, it follows that after hydrolysis the product is subjected to filtration to separate the liquid and solid phases, where the hydrolyzed protein broth, oil and mineral matter contained in the raw material that did not undergo the hydrolysis process. After filtration, the hydrolyzed product (hydrolyzed protein concentrate) is directed to the evaporator/concentrator to remove part of the water and concentrate the hydrolyzed protein broth, thus optimizing drying.

Drying, as already explained, is carried out in high-tech equipment, the Spray Dryer, where the water is evaporated at a decreasing temperature that goes from 180 °C at the entrance to 110 °C at the exit, guaranteeing a product with ideal granulometry and high digestibility, as it does not burn the protein. The final product will be chilled to ensure its shelf life within specified standards.

Considering the above, in this alternative configuration of the present invention, there are three steps prior to enzymatic hydrolysis:
- Raw material reception (RMP): poultry slaughter by-product, mechanically separated meat (CMS), livers, whole poultry and fish slaughter residues, and whole fish. The raw material must arrive at the factory fresh, within a maximum period of 24 hours after the slaughter of the animals.
- Crushing (TO): the raw material must be crushed into pieces of approximately 25 cm in size.
- Grinding (MO): after crushing, the raw material must be ground in a specific grinder with a sieve with a maximum hole of 8.00 mm, to ensure that the mass is fine.

Due to the diverse origin of the raw material, which may contain metallic remains mainly from the slaughterhouses, a metal detector (DM) is installed before the material enters the grinding stage, in order to preserve the grinder, avoiding stops at the plant of processing and damages resulting from equipment breakage.

Subsequently, the enzymatic hydrolysis reaction is processed, as described from the use of CPX, in step C, considering the alternatives C1, C2 and C3 as already described. As an important difference in relation to this enzymatic hydrolysis phase, comparing it with the enzymatic hydrolysis (C) previously described, there is the optional addition of water to the hydrolysis reaction medium, directly in the hydrolysis reactor, the water must be weighed in the load cells of the reactor itself, in an amount of up to 20% of water in relation to the total amount of material in the reactor.

The enzyme is also inactivated and the product is sterilized, in accordance with steps D and E already presented.

After sterilizing the product (E), there are four innovative steps, which are:
- Sieving (PE): after the product is hydrolyzed and sterilized, it must be pumped for sieving with 2.00 mm mesh sieves to separate coarser solid parts.
- Centrifugation (CD): after sieving, the product must be centrifuged in a Decanter to separate the oil. At this stage, the product will still have a small percentage of oil, less than 2.00% and will contain fine solids, in an amount of less than 1.00%, which must be eliminated in a new centrifugation step, below.
- Centrifugation in vertical centrifuges (CV): after centrifuging the product in a Decanter, it must be centrifuged in a vertical centrifuge (plates) to separate fine solids and fat, if any. After this phase, the product is guaranteed to have a solids content of less than 0.30% and a fat content of less than 0.30%.
- Concentration of the hydrolyzed broth (HCC): the already centrifuged concentrate with low fat and solids contents will present a dry mass content of 10% to 15%, which can be measured in degrees Brix, and must be further concentrated in evaporators to raise the dry mass concentration (Degrees Brix) for values between 30.00% and 56.00%.

The hydrolyzed broth obtained can then be submitted to the emulsification stage (EMU), from the installation of a suitable pump in the stabilization tank, where after said emulsification it must be subjected to stabilization (step H described above), being then packaged and stored properly. The emulsification of the product prior to stabilization is optional, being carried out mainly when there are high levels of fat and when the process is preferentially aimed at obtaining a fertilizer ingredient.

It should be noted that steps (F) and (G), previously described in the preferred configuration, are not carried out in this alternative configuration of the invention, since they are replaced by the described steps. Also, the product can be dried in a Spray Dryer (SSD) before or after the stabilization and addition of preservatives (H) to the product, that is, immediately after obtaining the hydrolyzed broth concentrate or after its subsequent stabilization, thus obtaining the product in powder form (PS). In the case of the powder form, step (I) is unnecessary, therefore steps (J) and (K) are not applied. If drying is not carried out, there is a liquid product (PL), to which the other steps (I), (J) and (K) are applied, without the drying step.

### DETAILED DESCRIPTION OF THE INVENTION

### FERTILIZER FROM POULTRY PROCESSING WASTE

The fertilizer composition developed comprises poultry by-products as raw material, originating from the slaughter of poultry in slaughterhouses.

Poultry viscera concentrate (CVA) is rich in protein, natural amino acids, nitrogen and organic carbon. The poultry viscera concentrate is obtained from the raw material of viscera, and is produced through a process of poultry viscera meal, called wet process.

All raw material is inspected and tracked in compliance with the requirements of the Ministry of Agriculture, Livestock and Supply and environmental agencies. It is important to point out that heavy metals are not used at the origin of the raw material, with no risk of contamination of the final product.

The collection of viscera concentrate (CVA) is done directly at the production unit in its own tank trucks. Upon arrival at the fertilizer factory, the loads are inspected to verify the quality and the unloading of the product will be arranged.

The concentrate is then pumped into stainless steel receiving tanks and kept homogenized until processing. The concentrate is then pumped into stainless steel receiving tanks and kept homogenized until processing. The pump used in this phase of the process must be suitable for dense or viscous compounds. A helical pump, also known as a NEMO Progressive Cavity pump, or even a sanitary stainless steel centrifugal pump can be used.

For processing, the concentrate is pumped into reactors where chemical reactions will take place. This entire process takes place with indirect steam at different temperature ranges, being fully automated and closed, preventing manual contact and cross-contamination of raw materials and products.

The production areas and equipment receive pre-operational and operational cleaning, following the instructions of the standard cleaning procedures, developed and inspected by the quality control of each plant. In addition, hygiene is carried out using efficient products duly authorized by Organs competent bodies.

The final product is monitored for physical and chemical analyses: organic matter, NPK and bacteriology, with analyzes carried out by production batch, with analyzes carried out in an internal laboratory or in laboratories contracted for this purpose. At the end of the production process, the expiry date and batch number are written on the printed label. In all products obtained from the poultry viscera concentrate process, there is a minimum guarantee of 3% organic carbon and 3% macronutrients (NPK).

In the plant where the process takes place, there is permanent care for the maintenance of facilities and equipment, changing rooms and sanitary barriers, lighting, ventilation, supply water, waste water and solid waste, pest control, cleaning and sanitation, employee hygiene and health, standardized operating procedures, raw materials, supplies and packaging, temperature control, calibration and measurement, laboratory controls in general and traceability.

In the case of the product obtained by this process, it should be noted the requirements arising from official legislation (IN 25, of July 23, 2009), which indicates that use is allowed in pastures and weeds only with soil incorporation. In the case of pastures, allow grazing only after 40 days after incorporating the fertilizer into the soil. Its use is also prohibited in feeding ruminants, and the product must be stored in a place protected from access by these animals.

As the first stage of the process developed, there is the treatment of raw material from poultry viscera for the production of poultry viscera protein concentrate (VAC).

For the selection of raw material suppliers, which are waste, to obtain the CVA, it is considered essential that the establishment be duly registered with the competent body and present good hygiene and safety conditions in obtaining and supplying by-products.

In terms of logistics, the location of the supplier and time of release of the material will also be considered, so that there is a guarantee that the by-products will be processed within a maximum period of 24 hours after the slaughter of the animals.

Upon receipt of by-products from poultry viscera, sensory analyzes are carried out in vehicles that will make up the batch. The by-products are inspected by trained personnel before unloading (still inside the vehicle), during unloading and after unloading, already in the reception hopper.

The transport vehicle must be in good hygiene conditions and be properly sealed and covered. No other type of material should be transported in the same vehicle other than poultry by-products.

The viscera raw material must have the odor and appearance of healthy material, clean and fresh and be accompanied by an animal waste transport document (DTRA, GT or CSN) issued by the supplier proving its origin.

Thus, the poultry viscera are transported to the raw material reception area by appropriate and exclusive vehicles for the transport of poultry by-products. The unloading of by-products is facilitated by a hydraulic platform that suspends the vehicles and the material is deposited in the reception hopper without any human contact.

In the reception hopper (RT), the viscera raw material is pre-treated with a dosage of 50 mL/t of antioxidant in the raw material, preferably using pure BHT or products that form a blend as antioxidant. The raw material is then taken by pumping to the crusher (TO) and after being crushed it is directed to the pre-heater (PAq), where it will be subjected to a temperature in the range of 90 to 96°C, for 15 to 20 minutes, the time between the product entering and leaving the preheating equipment is one hour, as the process is continuous.

After exiting the pre-heater, the cooked mass passes through a percolating screw (RP), where the first separation takes place between solids (material that still has fat) and liquids, which consist of water, solids and fat.

The solid part (PS1) also called cooked mass goes to the press and the liquid part (PL1, consisting of water, solids and fat) will go to the Tridecanter feed tank (TA-Tri), where it will remain at a temperature between 90 to 95°C. The liquid part (PL2) that was extracted from pressing is also directed to the Tridecanter feed tank and subsequently pumped to the Tridecanter.

The Tridecanter will separate (i) oil, (ii) water and proteins, a mixture known as glue water, and (iii) solids. The oil is directed to the boxes for decanting and purging and later to the tank where it is ready for sale. The dregs (iii - solids) are directed to the dryer, where they will mix with the pressed mass for the manufacture of poultry viscera flour.

The water and proteins (ii), which is the glue water, which leaves the Tridecanter is directed to the evaporation/concentration plant, where it will be concentrated, reaching 35 ° Brix, preferably 30 ° Brix, thus obtaining the protein concentrate of poultry viscera (CVA), which is then pumped to the storage tanks, completing the initial stage of pre-treatment of the raw material. Antioxidant may be dosed in the final product for conservation.

The evaporated water extracted from this pre-treatment process is directed to the respective treatment plant.

The CVA can be transported in isotonic vehicles or in containers that will transport the inspected before shipments to guarantee that there is no contamination, in case of need for transport to follow up the process of obtaining fertilizer composition from the CVA.

Starting from the CVA, the CVA is then transferred to the enzymatic hydrolysis reactor by pumping, with a helical pump, and the quality of this concentrate is especially important for the results of the final product, which is why the pre-treatment step of the viscera was developed in a particular way to provide such quality. It is important to mention that for the hydrolysis of poultry viscera concentrate it is not necessary to add water, the water itself contained in the raw material is sufficient for the hydrolysis reaction.

Prior to carrying out the hydrolysis reactions, the CVA solution must undergo an emulsification step, and this procedure takes place under agitation and recirculation of the product in the reactor itself with a suitable pump. This stage is important for the final product to become uniform, not allowing the formation of phases, so that it does not separate into more than one phase. It is noteworthy that the most suitable enzymes for the hydrolysis process in question are the proteases, which perform well at different pH values.

As for the hydrolysis reactor, it must be made of stainless steel and jacketed, that is, heating must be with steam in the jacket. The internal shaft must be equipped with its own stirrer for perfect homogenization of the solution. Also, instruments necessary for the operation are: load cells, thermometers, pH sensors and solenoid valves for controlling the steam in the reactor jacket. The pH and Temperature sensors must be installed at the bottom and top of the reactor in order to have process control. And, for better steam control in the reactor jacket, a solenoid valve must be installed in the steam inlet network to maintain the established constant temperature. The load cells must be installed on the reactor support feet so that the raw materials that make up the product formula can be weighed, which must be in precise quantities. In this reactor, enzymatic hydrolysis reactions of proteins are carried out, transforming them into amino acids and leaving free other elements, such as organic carbon. It is relevant to observe in this aspect that the process developed is far removed from the usual fermentation processes, not only due to the time, substantially reduced, due to the optimal parameters obtained, but also due to the stability of the sterilized final product, which gives the process absolute synergy between the material of raw poultry viscera, its particular parameters for treatment and the quality and versatility of the product obtained.

Considering the above, from the pre-treatment of the viscera raw material and obtaining the CVA, there are the following steps:
A) Pumping the CVA into the hydrolysis reactor(s).
B) Emulsification of the solution obtained, by activating the stirrer, with subsequent use of steam to heat the solution and activating the emulsification pump to recirculate the mixture inside the reactor itself.
C) Enzymatic hydrolysis reaction, with parameter adjustment according to one of the three configurations below, choosing one of them and processing before following the procedures:
   C1. Enzymatic hydrolysis in alkaline medium: the enzyme indicated for the process is alkaline protease, with the amount of enzyme to be added being 0.5% in relation to the total mass to be processed. The enzyme is added when the temperature reaches 40°C, and then kept between 40 and 70°C, preferably at 65°C. As for the pH, it is recommended to keep it between 7.50 and 11.00, with the optimum working range being 8.00 and 9.00, and preferably the pH should be kept close to 8.50. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 3 hours, with an average time of 2 hours for the enzyme to transform proteins into free amino acids.
   C2. Enzymatic hydrolysis in an acid medium: the enzyme indicated for the process is acid protease, with the amount of enzyme to be added being 0.5% in relation to the total mass to be processed. The enzyme is added when the temperature reaches 40°C, and then kept between 40 and 65°C, preferably at 60°C. As for the pH, it is recommended to keep it between 2.00 and 6.00, with the optimum working range being 2.50 and 4.50, and preferably the pH should be kept close to 4.00. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 3 hours, with an average time of 2 hours for the enzyme to transform proteins into free amino acids.
   C3. Enzymatic hydrolysis in neutral medium: the enzyme indicated for the process is neutral protease, with the amount of enzyme to be added being 0.5% in relation to the total mass to be processed. The enzyme is added when the temperature reaches 40°C, and then kept between 40 and 60°C, preferably at 55°C. As for the pH, it is recommended to keep it between 5.50 and 9.50, with the optimum working range being 6.50 and 7.50, and preferably the pH should be kept close to 7.00. Adjusting the pH is done by adding sodium hydroxide (NaOH) or potassium hydroxide (KOH) to raise it and phosphoric acid to lower it, according to the need, and the reagents must be pumped to the hydrolysis reactor. The recommended time for the hydrolysis reaction is from 1 to 3 hours, with an average time of 2 hours for the enzyme to transform proteins into free amino acids.
D) Enzyme inactivation: after the hydrolysis period, it is necessary to raise the process temperature to 90°C for 30 minutes to inactivate the enzyme.
E) Product sterilization: after enzyme inactivation, keep the reactor heated at 90°C for another 30 minutes to eliminate the biological agents, totaling the inactivation and sterilization time of one hour.
F) Filtration: at the end of the hydrolysis process, the product must be filtered and sent to the acidification tank to finish the product.
G) Cooling: in the acidification tank after inactivation and sterilization, the product must be cooled to a temperature of 70 °C.
H) Stabilization: in the stabilization tank, the product must be allowed to cool down to a temperature below 70 °C, in this temperature range adjust the pH between 2.50 to 3.50. The pH correction must be carried out with the addition of phosphoric acid, NaOH or KOH. It is important to keep the pH close to 3.00 for the stability of the product, so that it has more durability, especially in liquid form. If an organ mineral fertilizer is to be obtained as a product, phosphoric acid must be used in this step. If a simple organic fertilizer is to be obtained as a product, phosphoric acid is not used in this step. Hydrochloric acid or citric acid can also be used as acid reagents for pH adjustment up to 3.0. Preferably, pH correction should be performed with the addition of industrial or food grade phosphoric acid to lower it; or NaOH or KOH to elevate it, as needed.
I) Addition of preservatives: after pH adjustment, during stabilization, add preservative products, such as antifungals and antioxidants in the amount recommended by the product manufacturer.
J) Storage: the product must be stored in stainless steel material tanks.
K) Packaging: the product can be packaged in 50-liter drums, 1,000-liter containers or delivered in bulk in tank trucks.

Optionally, the process may comprise obtaining fertilizer compost in powder form. Thus, alternatively, after the stabilization step, it is possible to direct the intermediate obtained to the drying process in a Spray Dryer in order to obtain a solid, as well as it is possible, optionally, the addition of macro or micronutrients at the end according to the desired application. The drying of the product, in this case, is carried out in the Spray Dryer equipment. The liquid product is pumped to the disk or spray nozzle and then to the drying chamber. The ideal operating temperature in the Spray Dryer's drying chamber is 170°C to 200°C, preferably 180°C at the inlet and 100°C and 120°C at the outlet, preferably 110°C. As commonly used in the industry, the operation of the Spray Dryer relies on the spraying of product particles in its chamber, being subjected to a controlled stream of hot air. Together with these processes, the vaporization of the water contained in it takes place, and consequently the ultra-fast separation of solids and soluble. Based on the defined parameters, it is possible to obtain a product in powder form, with moisture content below 5%. Drum Dryers can also be used in this step as an alternative setup.

All processes are carried out with minimal degradation of the drying product, as the Spray Dryer places the solvent under a controlled temperature for seconds and this causes the solvent to evaporate instantly with a minimal rise in the temperature of the wet material. And, in the case of the developed process, it is not trivial to use the selected temperatures in question, at the entrance and exit of the drying process, which demonstrated, together with the other process parameters, to be synergistically integrated with the optimal conditions for obtaining a powdered product that does not require grinding and is ready for subsequent filling after cooling to room temperature. The use of the Spray Dryer under these conditions eliminates the occurrence of a negative impact on the chemical and physical properties of the product, and it is also possible to improve these properties since the procedure stabilizes the final product obtained.

Still in the case of the solid product in powder form, the process described takes place in the stabilization stage still in the liquid state as explained, considering the pH range (3.00) with adjustment with phosphoric acid, preservatives and antifungals. However, in the case of powdered fertilizer, the aforementioned adjustment to a pH equal to 3.00 is optional, and thus the addition of phosphoric acid is also optional, that is, if you want to make a product with a low phosphorus content, it is not necessary. add phosphoric acid. Because the humidity is low, the product will have a long shelf life without the need to adjust the pH to 3.00. However, even without this need, if you want a product previously enriched with phosphorus, you can proceed with the stabilization step using phosphoric acid as already described.

All descriptions presented herein are illustrative and illustrative of the innovative development that represents the process, product and use herein claimed. Therefore, there should be no restriction of the process to the elements described herein. It is a process of renewable, sustainable origin, which transforms products that would be discarded into base material to obtain compositions rich in essential amino acids for plants, of natural origin, based on the use of poultry viscera, which would be discarded by slaughterhouses.

Still as an alternative configuration, it should be mentioned that the enzymatic hydrolysis reactor employed is not limited to operation at atmospheric pressure. In other words, it is possible to use a pressurized environment to obtain the benefits arising from the optimization of the enzymatic hydrolysis reaction. Complementarily, as alternative configurations, it is possible to use advanced techniques in conjunction with the enzymatic hydrolysis reaction, such as those related to the exposure of the reaction system to ultrasonic waves.

It is important to emphasize that the process is free of heavy metals, which eliminates the risk of contamination in the final product. With regard to the organic matter content, mainly, as well as the other physicochemical characteristics of the product obtained through the developed process, there are the following differentials:
- In the product obtained in liquid form, by the main route, without processing to obtain the powder via Spray Dryer, it is possible to guarantee a minimum of 19% of total amino acids.
- In the product obtained in powder form, by the alternative route that includes sending it for drying in a Spray Dryer, it is possible to guarantee a minimum of:
- 54% of total amino acids;
- 7% nitrogen;
- 36% organic carbon; and
- 80% organic matter.

Seeking to base and illustrate the characteristics of the products that can be obtained by the claimed process, the following tables are presented, comprising:
- Table 1 - Aminogram of the viscera protein concentrate sample obtained after the hydrolysis step (D);
- Table 2 - Aminogram of the poultry viscera hydrolysate obtained after carrying out the process using the alternative route, including drying in a Spray Dryer (in alternative, non-limiting configurations of technology, it is also possible to use Drum Dryers in drying), in this case it is noted that the CVA was made up only of viscera and residues from the processing of chickens;
- Table 3 - Complete analysis report and sample C/N of the liquid organic fertilizer product obtained through the process claimed herein considering the application via soil; and
- Table 4 - Complete analysis report and sample C/N of the liquid organic fertilizer product obtained through the process claimed herein considering the foliar application.

**Table 1 - Test Report - Viscera Protein Concentrate Sample - After Hydrolysis - Aminogram**

| Essay | Result | Unit |
|---|---|---|
| Crude Protein | 25.32 | (g/100g) |
| Dig. (Pepsin 0.002%) | 97.74 | (g/100g) |
| E.E. Acid Hydrolysis | 1.82 | (g/100g) |
| Moisture-Loss by Desiccation- | 61.13 | (g/100g) |
| Dry Matter | 38.03 | (g/100g) |
| Mineral Matter | 10.33 | (g/100g) |
| Calcium | 0.0475 | (g/100g) |
| Total Phosphorus | 2.5787 | (g/100g) |
| Alanine | 1.5161c | (g/100g) |
| Arginine | 1.5356c | (g/100g) |
| Aspartic Acid | 1.4347c | (g/100g) |
| Glycine | 2.6797c | (g/100g) |
| Isoleucine | 0.5619c | (g/100g) |
| Leucine | 1.1695c | (g/100g) |
| Glutamic Acid | 3.0017c | (g/100g) |
| Lysine | 1.5572c | (g/100g) |
| Cystine | 0.0435c | (g/100g) |
| Methionine | 0.3251c | (g/100g) |
| Phenylalanine | 0.6498c | (g/100g) |
| Tyrosine | 0.3533c | (g/100g) |
| Threonine | 0.8044c | (g/100g) |
| Tryptophan | NOT DETECTED | (g/100g) |
| Proline | 1.5960c | (g/100g) |
| Hydroxy Proline | 1.2144 | (g/100g) |
| Valine | 0.7046c | (g/100g) |
| Histidine | 0.5455c | (g/100g) |
| Serine | 0.7065c | (g/100g) |
| Sodium | 4,168.0400 | (mg/Kg) |
| Potassium | 8,498.5100 | (mg/Kg) |
| Peroxide Index | NOT DETECTED | (mEq/Kg) |
| Acidity Level | 0.72 | (mgNaOH/g) |
| Total Coliforms | < 3.0 | (NMP/g) |
| *Escherichia coli* | < 3.0 | (NMP/g) |
| *Salmonella sp* | Absent | (25g) |
| *Clostridium Perfringens* | < 10 | (UFC/g) |
| Taurine | 0.4053 | (g/100g) |
| Biogenic Amines | 3646,5613 | (mg/Kg) |

| | | |
|---|---|---|
| *c* - *Indicates result twice confirmed by the contracted analysis laboratory.* | | |

**Table 2 - Test Report - Hydrolyzed Poultry Guts - Spray Dryer Powder - Aminogram**

| Essay | Result | Unit |
|---|---|---|
| Aspartic Acid | 5.17 | % |
| Glutamic Acid | 9.41 | % |
| Serine | 2.21 | % |
| Glycine | 7.85 | % |
| Histidine | 1.10 | % |
| Taurine | 1.18 | % |
| Arginine | 4.00 | % |
| Threonine | 1.56 | % |
| Alanine | 4.50 | % |
| Proline | 4.98 | % |
| Tyrosine | 1.08 | % |
| Valine | 2.04 | % |
| Methionine | 0.93 | % |
| Cystine | 0.86 | % |
| Isoleucine | 1.59 | % |
| Leucine | 2.96 | % |
| Phenylalanine | 1.56 | % |
| Lysine | 3.57 | % |
| Tryptophan | 0.26 | % |
| Sum of Amino Acids | 56.81 | % |
| Moisture and Volatiles | 4.03 | % |
| Crude Protein | 72.66 | % |
| Ethereal Extract by Acid Hydrolysis | 9.95 | % |
| Gross Fiber | 0.30 | % |
| Digestibility in Pepsin | 95.55 | % |
| Mineral Matter | 9.46 | % |
| Calcium | 0.11 | % |
| Phosphor | 1.03 | % |

**Table 3 - Test Report - Complete Analysis + C/N (Via Soil) - Sample of the liquid organic fertilizer product obtained through the process claimed herein**

| Essay | Result | Unit | LQ |
|---|---|---|---|
| Nitrogen | 2.82 | % | - |
| Total Phosphorus | 9.7 | % | - |
| Potassium (HNO3 + HClO4) | 0.95 | % | - |
| Calcium (HNO3 + HClO4) | 0.02 | % | - |
| Magnesium (HNO3 + HClO4) | 0.39 | % | - |
| Copper (HNO3 + HClO4) | 142.46 | ppm | - |
| Manganese (HNO3 + HClO4) | 0 | ppm | - |
| Iron (HNO3 + HClO4) | 0 | ppm | - |
| Zinc (HNO3 + HClO4) | 58.15 | ppm | - |
| Aluminum (HNO3 + HClO4) | 532.5 | ppm | - |
| Sulfur (SO4) | 0.05 | % | - |
| Sodium (HNO3 + HClO4) | 1.47 | % | - |
| Boron | 0.01 | % | - |
| Cobalt (HNO3 + HClO4) | 52.08 | ppm | - |
| Molybdenum (HNO3 + HClO4) | 246.53 | ppm | - |
| Organic Carbon | 9.33 | % | 0.44 |
| C/N ratio | 3 | - | - |
| Density | 1.16 | g/cm3 | - |
| Humidity (65°C) | 27.49 | % | - |
| Organic Matter | 69.48 | % | - |
| Ashes | 30.52 | % | - |

**Table 4 - Test Report - Complete Analysis + C/N (Leaf route) - Sample of the liquid organic fertilizer product obtained through the process claimed herein**

| Essay | Result | Unit | LQ |
|---|---|---|---|
| Nitrogen | 2.82 | % | - |
| Phosphorus (sol. water) | 0 | % | - |
| Potassium (sol. water) | 0.88 | % | - |
| Calcium (sol. water) | 98.57 | ppm | - |
| Magnesium (sol. water) | 243.15 | ppm | - |
| Sulfur (SO4) | 0.05 | % | - |
| Sodium (sol. water) | 1.61 | % | - |
| Boron | 0.01 | % | - |
| Copper (sol. water) | 0 | ppm | - |
| Iron (sol. water) | 0 | ppm | - |
| Manganese (sol. water) | 0 | ppm | - |
| Zinc (sol. water) | 42.73 | ppm | - |
| Aluminum (sol. water) | 307.5 | ppm | - |
| Cobalt (HNO3 + HClO4) | 9.31 | ppm | - |
| Molybdenum (HNO3 + HClO4) | 229.52 | ppm | - |
| Hydrogen Potential | 3.2 | - | - |
| Density | 1.16 | g/cm3 | - |
| Organic Carbon | 9.33 | % | 0.44 |
| Organic Matter | 69.05 | % | - |
| C/N ratio | 3 | - | - |
| Humidity (65°C) | 27.49 | % | - |

The presented results confirm that the developed process route generates a differentiated product and with a wide range of applications, representing a significant advance in the state of the art, mainly due to the innovative use of poultry viscera subjected to a pre-treatment process to obtain a poultry viscera concentrate (VAC).

Taking into account the possibility of additives to the final product, in one of the alternative configurations of this development, the following nutrients can be added, with their respective minimum total contents for application in the soil of: Ca (1% in the solid form of the fertilizer and 0.5% in the fluid form); Mg (1% in the solid form of the fertilizer and 0.5% in the fluid form); S (1% in the solid form of the fertilizer and 0.5% in the fluid form); B (0.03% in the solid form of the fertilizer and 0.01% in the fluid form); Cl (0.1 % in the solid form of the fertilizer and 0.1% in the fluid form); Co (0.005% in solid fertilizer form and 0.005% in fluid form), Cu (0.05% in solid fertilizer form and 0.05% in fluid form), Fe (0.2% in solid fertilizer form and 0.1% in fluid form), Mn (0.05% in solid fertilizer form and 0.05% in fluid form), Mo (0.005% in solid fertilizer form and 0.005% in fluid form), Ni (0.005 % in solid fertilizer form and 0.005% in fluid form), Si (1% in solid fertilizer form and 0.5% in fluid form), Zn (0.1% in solid fertilizer form and 0.05% in fluid form). One or more of the listed nutrients may be added.

In the case of foliar application, fertigation and hydroponics, the minimum total soluble content in water of additives, which may be one or more of the additives described below, must be: Ca (0.5% in solid fertilizer form and 0.3% in fluid form), Mg (0.5% in solid fertilizer form and 0.3% in fluid form), S (0.5% in solid fertilizer and 0.3% in fluid form), B (0.02% in solid fertilizer form and 0.01% in fluid form), Cl (0.1% in solid fertilizer form and 0.1% in fluid form), Co (0.005% in solid fertilizer form and 0.005% in fluid form), Cu (0.05% in solid fertilizer form and 0.05% in fluid form), Fe (0.1% in solid fertilizer form and 0.02% in fluid form), Mn (0.1% in solid fertilizer form and 0.02% in fluid form), Mo (0.02% in solid fertilizer form and 0.005% in fluid form), Ni (0.005% in solid fertilizer form and 0.005% in fluid form), Si (0.5% in solid fertilizer form and 0.05% in fluid form), Zn (0.1% in fertilizer solid and 0.05% in fluid form).

In an alternative configuration, the final powder product obtained after drying in a Spray Dryer, given its characteristics, mainly of high levels of amino acids, can be used in animal feed and nutrition and not just for plant nutrition. The sanity of the entire process, in addition to the characteristics attributed to the product resulting from all stages of the process, enables the powder product obtained to be used as a composition element for animal nutrition.

The characteristics and composition of the concentrated product obtained after hydrolysis, as shown in Table 3, demonstrate that in the case of use as an ingredient in animal nutrition, it is possible to verify a high degree of digestibility of amino acids, and an animal nutritional composition, which is configured as an ingredient for animal feed or food supplements for animals, with characteristics such as: being hypoallergenic, depending on the molecular size of its compounds, also due to the entire pre-treatment of the raw material, as well as stabilization and sterilization of the final product; have high protein content, and have high digestibility. In addition, the ingredient for production processes of compounds for animal nutrition can have functional characteristics, in addition to, mainly, having an organic, natural and sustainable origin.

Alternative Configuration - Route-optimized Enzymatic Hydrolysis Reaction with minimal pre-treatment and capable of comprehensive processing of waste and/or raw materials containing proteins of animal origin

In an alternative and non-limiting configuration, direct processing of enzymatic hydrolysis of poultry viscera is possible. In this regard, the same process applies to fish by-products and/or waste, including whole fish. This alternative configuration allows the production of protein concentrate from raw materials, such as those listed, directly deposited in the enzymatic hydrolysis reactor after minimal pre-processing, and additional post-treatment steps, as will be explained.

As in the case of the preferential route, considering the liquid product stabilization step (H), it is necessary to reduce the pH to a value equal to 3.0, preferably using phosphoric acid. However, similarly to the basic process (steps from A to K, considering the intermediate possibility of drying to obtain a powdered product), if a product without phosphorus is chosen, the acid in question must be replaced by Citric acid.

The use of protein hydrolysates from animal sources in specific formulations is an area of growing interest. The industries focused on the development of nutritional compositions for pets, the pets; pig farming and fish farming are the main sectors interested in products that can be used as functional ingredients in food systems from protein hydrolysates such as those obtained through the process claimed herein.

The hydrolysis of food proteins is already a reality in proteins, vegetables, milk and collagen. However, little concrete and detailed work is available on the hydrolysis of chicken, beef, pork and fish proteins.

For this reason, the present development contemplates a complementary configuration that includes the comprehensive hydrolysis of animal proteins and, with that, seeks to meet the growing market demand for functional products with high nutritional value.

In this alternative configuration, the processing of raw materials is foreseen: fresh poultry viscera and livers, pork livers, fish such as sardines and tilapia residues and others, and the corresponding residues.

The final product can be either in liquid or powder form. Since the same products can be configured in: palatability agents for animal feed, products in general with nutritional value for animals, organic fertilizers, simple organic fertilizers and organ minerals, and also foliar fertilizers.

The process of this alternative configuration foresees, as well as that of the preferential route, foresees the use of industrial biotechnology, and of optimized enzymatic hydrolysis reactions, as previously demonstrated. There are several process steps under ideal conditions to obtain a product with high digestibility, solubility, low fat, high protein, low mineral matter, free amino acids and health guarantees, since the product is sterilized.

Considering the route already described for this process (route of steps A to K), it follows that after enzymatic hydrolysis the product is subjected to filtration to separate the liquid and solid phases where the protein broth is separated hydrolyzed, the oil and mineral matter contained in the raw material that did not undergo the hydrolysis process. After filtration, the hydrolyzed product (hydrolyzed protein concentrate) is directed to the evaporator/concentrator to remove part of the water and concentrate the hydrolyzed protein broth, thus optimizing drying.

Drying, as already explained, is done in high-tech equipment, the Spray Dryer, where the water is evaporated at a decreasing temperature, preferably from 180 °C at the entrance to 110 °C at the exit, guaranteeing a product with ideal granulometry, in the powder form, and high digestibility, as it does not burn the protein. The final product will be chilled to ensure its shelf life within specified standards.

Considering the above, in this alternative configuration, there are three steps prior to enzymatic hydrolysis:
- Receipt of raw material (RMP), which may be: by-product of poultry slaughter, such as poultry viscera; mechanically separated meat (CMS); livers; whole poultry and fish slaughter waste, and whole fish. The raw material must arrive at the factory fresh, within a maximum period of up to 24 hours after the slaughter of the animals.
- Crushing (TO): the raw material must be crushed into pieces of approximately 25 cm in size.
- Grinding (MO): after crushing, the raw material must be ground in a specific grinder with a sieve with a maximum hole of 8.00 mm, to ensure that the mass is fine.

Due to the diverse origin of the raw material, which may contain metallic remains mainly from the slaughterhouses, a metal detector (DM) is installed before the material enters the grinding stage, in order to preserve the grinder, avoiding stops at the plant of processing and damages resulting from equipment breakage.

Subsequently, the enzymatic hydrolysis reaction is processed, as described from the use of CVA, in step C, considering the alternatives C1, C2 and C3 as already described. As an important difference in relation to this enzymatic hydrolysis phase, comparing it with the enzymatic hydrolysis (C) previously described, there is the optional addition of water to the hydrolysis reaction medium, directly in the hydrolysis reactor, the water must be weighed in the load cells of the reactor itself, in an amount of up to 20% of water in relation to the total amount of material in the reactor.

The enzyme is also inactivated and the product is sterilized, in accordance with steps D and E already presented.

After sterilizing the product (E), there are four innovative steps, which are:
- Sieving (PE): after the product is hydrolyzed and sterilized, it must be pumped for sieving with 2.00 mm mesh sieves to separate coarser solid parts.
- Centrifugation (CD): after sieving, the product must be centrifuged in a Decanter to separate the oil. At this stage, the product will still have a small percentage of oil, less than 2.00% and will contain fine solids, in an amount of less than 1.00%, which must be eliminated in a new centrifugation step, below.
- Centrifugation in vertical centrifuges (CV): after centrifuging the product in a Decanter, it must be centrifuged in a vertical centrifuge (plates) to separate fine solids and fat, if any. After this phase, the product is guaranteed to have a solids content of less than 0.30% and a fat content of less than 0.30%.
- Concentration of the hydrolyzed broth (HCC): the already centrifuged concentrate with low fat and solids contents will present a dry mass content of 10% to 15%, which can be measured in degrees Brix, and must be further concentrated in evaporators to raise the dry mass concentration (Degrees Brix) for values between 30.00% and 56.00%.

The hydrolyzed broth obtained can then be submitted to the emulsification stage (EMU), from the installation of a suitable pump in the stabilization tank, where after said emulsification it must be subjected to stabilization (step H described above), being then packaged and stored properly. The emulsification of the product prior to stabilization is optional, being carried out mainly when there are high levels of fat and when the process is preferentially aimed at obtaining a fertilizer ingredient.

It should be noted that steps (F) and (G), previously described in the preferred configuration, are not carried out in this alternative configuration, since they are replaced by the described steps. Also, the product can be dried in a Spray Dryer before or after the stabilization and addition of preservatives (H) to the product, that is, immediately after obtaining the hydrolyzed broth concentrate or after its subsequent stabilization, thus obtaining the product in powder form. In the case of the powder form, step (I) is unnecessary, therefore steps (J) and (K) are not applied.

## Claims

1. Production process of fertilizer composition from by-products of the fishing industry employing emulsification procedures (B); enzymatic hydrolysis (C); enzyme inactivation (D); sterilization (E); filtration (F); cooling (G); stabilization (H) of the product under temperature and pH reduction; addition of preservatives, antifungals and antioxidants (I); storage in stainless steel material tanks (J); and packaging (K) in drums, containers or shipping in bulk in tank trucks, **characterized in that** comprising the pre-treatment stage of raw materials such as whole fish and/or fish waste and/or fish waste of marine origin or fish fresh water and/or fish waste containing accompanying fauna, being any species of fish.

2. Production process of fertilizer composition from by-products of the fishing industry employing enzymatic hydrolysis procedures (C), enzyme inactivation (D), sterilization (E), stabilization (H) of the product under temperature and pH reduction **characterized in that** comprising a pre-treatment step of raw materials such as whole fish and/or fish waste and/or fish waste of marine origin or fish fresh water and/or fish waste containing by-catch fauna, being any species of fish, the said raw material pre-treatment stage comprising the sub-steps of:
i. reception and storage of the raw material up to 24 hours after the slaughter of the animals, the said basic raw material being fish waste with or without accompanying fauna, being any species of fish, plus one or more complementary raw materials selected from the group consisting of poultry slaughter by-products, mechanically separated meat, livers, whole poultry and fish slaughter residues, and whole fish;
ii. crushing the stored raw material into 25 cm pieces; and
iii. grinding of the crushed raw material in a grinder with a sieve with a maximum hole of 8.00 mm.

3. Process according to claim 2, employing, after grinding the crushed raw material, enzymatic hydrolysis procedures (C), enzyme inactivation (D) and sterilization (E), **characterized in that**, after sterilizing the product (E), the following steps are carried out:
i. sieving the crushed and ground raw material through 2.00 mm mesh sieves;
ii. centrifugation of the passage in a Decanter, obtaining two phases, one of oil and the other of centrifuged product having oil content lower than 2.00%, and amount of fine solids lower than 1.00%;
iii. centrifugation in vertical centrifuges of the centrifuged product, constituting the same hydrolyzed broth, obtaining a product with a solids content lower than 0.30%, fat percentage lower than 0.30% and dry mass content between 10 and 15% ; and
iv. concentration of the hydrolyzed broth in evaporators until the dry mass concentration in degrees Brix between 30 and 56.

4. Process according to claim 1, **characterized in that** the liquid obtained after the cooling step (G) or after the product stabilization step (H) or after the addition of preservatives, antifungals and antioxidants (I) step is subjected to the step of drying in a Spray Dryer at a temperature of 180 °C at the entrance and 110 °C at the exit.

5. Process according to claims 2 and 3, **characterized in that** the concentrated hydrolyzed broth is subjected to the drying stage in a Spray Dryer at a temperature of 180 °C at the entrance and 110 °C before or after the stabilization of the product (H).

6. Process according to claims 1 or 2 and 3, **characterized in that** it comprises steps of adding macronutrients and/or micronutrients, one or more being selected from the group consisting of calcium, magnesium, sulfur, boron, chlorine, cobalt, copper, iron, manganese, molybdenum, nickel, silicon and zinc.

7. Fertilizing composition **characterized in that** it is obtained according to any of the preceding claims.

8. Fertilizer composition **characterized in that** comprising the raw material for the enzymatic hydrolysis step (C) the protein concentrate obtained from fish waste (CPX) having a minimum °Brix of 30.

9. Fertilizer composition **characterized in that** comprising the raw material fish waste.

10. Fertilizer composition according to claims 7 or 8 or 9, **characterized in that** it is liquid and comprises a minimum content of free amino acids of 17%.

11. Fertilizer composition according to claims 7 or 8 or 9, **characterized in that** it is solid in powder form and comprises a minimum nitrogen content of 7%, a minimum amino acid content of 54%, a minimum organic matter content of 80% and a minimum content of 36% organic carbon.

12. Use of the fertilizer composition according to any of the preceding claims, **characterized in that** it is used in the preparation of liquid foliar fertilizer, soil conditioning agent, and/or powdered fertilizer.

13. Use of composition obtained according to any of claims 1 to 6 **characterized in that** being used as an ingredient in the preparation of animal feed compositions and/or supplements for animal nutrition.

14. Process of production of fertilizer composition from poultry processing waste, product obtained and use, using emulsification procedures (B); enzymatic hydrolysis (C); enzyme inactivation (D); sterilization (E); filtration (F); cooling (G); stabilization (H) of the product under temperature and pH reduction; addition of preservatives, antifungals and antioxidants (I); storage in stainless steel material tanks (J); and packaging (K) in drums, containers or shipping in bulk in tank trucks, **characterized in that** comprising:
stage of pre-treatment of raw material of the type of waste of poultry viscera, being any species of bird, comprising the said stage of pre-treatment of raw material the sub-stages of
i. carrying out sensory analyzes in the receipt of by-products of poultry viscera;
ii. confirmation of the presence of odor and appearance of healthy, clean and fresh material and animal waste transport documents issued by the supplier proving its origin;
iii. transportation of viscera to the raw material reception area;
iv. discharge by hydraulic platform, without human contact and deposit in reception hopper;
v. dosing directly into the reception hopper of 50 mL of antioxidant compound per ton of poultry viscera raw material;
vi. transport of the contents of the reception hopper to the crusher (TO);
vii. directing the crushed product obtained in (vi) to a pre-heater (PAq) subjecting the reaction mass to the pre-heating step for one hour, during which time it was subjected to a temperature of 90°C to 96°C, for a time of 15 to 20 minutes;
viii. passing the cooked mass obtained in (vii) through a percolating screw (RP);
ix. pressing (PR) of the solid portion (PS 1) obtained in (viii);
x. temperature adjustment of the Tridecanter feed tank (TA-Tri) to a value of 90 to 95°C;
xi. directing the liquid portion (PL1) obtained in (viii) and the liquid portion obtained under pressing (PL2) in (ix) to the Tridecanter feed tank;
xii. pumping the obtained in (xi) to the Tridecanter;
xiii. obtaining three portions, being oil (OL), water and proteins (AP), and solids (SS);
xiv. directing OL to boxes for decanting and purging (DP) and later to the storage tank (TA);
xv. direction of SS and solids obtained in (ix) (PS2) to dryer (SE);
xvi. obtaining poultry viscera meal (FVA) from (xv);
xvii. directing the water and proteins (AP) obtained in (xiii) to the evaporation column (CE), obtaining protein concentrate from poultry viscera (CVA) with a minimum of 30 °brix;
xviii. pumping the CVA obtained in (xvii) to storage tanks;
xix. addition of preservatives to the storage tank; and
xx. pumping the CVA obtained in to the hydrolysis reactor(s);
and for comprising as a parameter of the enzymatic hydrolysis reaction (C) a hydrolysis time of 1 to 3 hours, said reaction being selected from the group consisting of enzymatic hydrolysis in an acid medium, in a neutral medium or in a basic medium.

15. Fertilizer composition production process, according to claim 14, employing procedures enzymatic hydrolysis (C), enzyme inactivation (D), sterilization (E), stabilization (H) of the product under temperature and pH reduction, **characterized in that** comprising:
pre-treatment stage of raw material of the poultry viscera type, the said stage of pre-treatment of raw material comprising the sub-steps of:
i. reception and storage of the raw material up to 24 hours after the slaughter of the animals, being the said basic raw material, poultry viscera residues, added with one or more complementary raw materials selected from the group consisting of poultry slaughter by-products, mechanically separated meat (CMS), livers, whole poultry and fish slaughter residues, and whole fish;
ii. crushing the set of raw materials resulting from (i) into 25 cm pieces; and
iii. grinding of the crushed raw material from (ii) in a grinder with a sieve with a maximum hole of 8.00 mm.

16. Process according to the previous claim, employing, after grinding the crushed raw material, enzymatic hydrolysis procedures (C), enzyme inactivation (D) and sterilization (E), **characterized in that**, after product sterilization (E), the following steps are carried out:
i. sifting the crushed and ground raw material through 2.00 mm mesh sieves;
ii. centrifugation in Decanter, obtaining two phases, one of oil and another of centrifuged product having oil content lower than 2.00%, and amount of fine solids lower than 1.00%;
iii. centrifugation in vertical centrifuges of the centrifuged product, constituting the same hydrolyzed broth, obtaining a product with a solids content lower than 0.30%, fat percentage lower than 0.30% and dry mass content between 10 and 15%; and
iv. concentration of hydrolyzed broth in evaporators to dry mass concentration in Brix degrees between 30 and 56.

17. Process according to claim 14, **characterized in that** the liquid obtained after the cooling step (G) or after the product stabilization step (H) or after the addition of preservatives, antifungals and antioxidants (I) step is subjected to the step of drying in a Spray Dryer at a temperature of 180 °C at the entrance and 110 °C at the exit.

18. Process according to claims 15 and 16, **characterized in that** the concentrated hydrolyzed broth is subjected to the drying stage in a Spray Dryer at a temperature of 180 °C at the entrance and 110 °C before or after the stabilization of the product (H).

19. Process according to claims 14 or 15 and 16, **characterized in that** it comprises steps of adding macronutrients and/or micronutrients, one or more being selected from the group consisting of calcium, magnesium, sulfur, boron, chlorine, cobalt, copper, iron, manganese, molybdenum, nickel, silicon and zinc.

20. Fertilizing composition **characterized in that** it is obtained according to any of claims 14 to 19.

21. Fertilizing composition **characterized in that** comprising as raw material for the enzymatic hydrolysis step (C) poultry viscera protein concentrate (CVA) with a minimum °Brix of 30.

22. Fertilizing composition **characterized in that** comprising the raw material poultry viscera waste.

23. Fertilizing composition according to claims 20 or 21 or 22, **characterized in that** it is liquid and comprises a minimum content of free amino acids of 19%.

24. Fertilizing composition according to claims 20 or 21 or 22, **characterized in that** it is solid in powder form and comprises a minimum nitrogen content of 7%, a minimum amino acid content of 54%, a minimum organic matter content of 80% and a minimum content of 36% organic carbon.
